(19) Europäisches Patentamt / European Patent Office / Office européen des brevets

(11) **EP 3 880 498 B1**

(12) **FASCICULE DE BREVET EUROPEEN**

(45) Date de publication et mention de la délivrance du brevet:
**27.09.2023 Bulletin 2023/39**

(21) Numéro de dépôt: **19832719.9**

(22) Date de dépôt: **14.11.2019**

(51) Classification Internationale des Brevets (IPC):
**B60C 23/04** (2006.01)     **B60W 40/13** (2012.01)
**B60W 40/068** (2012.01)

(52) Classification Coopérative des Brevets (CPC):
**B60C 23/0488; B60W 40/068; B60W 40/13;**
B60W 2530/20

(86) Numéro de dépôt international:
**PCT/FR2019/052697**

(87) Numéro de publication internationale:
**WO 2020/099784 (22.05.2020 Gazette 2020/21)**

(54) **PROCEDE DE DETERMINATION DE LA CHARGE APPLIQUEE SUR UN PNEUMATIQUE**

VERFAHREN ZUR FESTSTELLUNG EINER RADLAST

METHOD FOR DETERMINING THE LOAD APPLIED ON A TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2018 FR 1860478**

(43) Date de publication de la demande:
**22.09.2021 Bulletin 2021/38**

(73) Titulaire: **COMPAGNIE GENERALE DES ETABLISSEMENTS MICHELIN**
**63000 Clermont-Ferrand (FR)**

(72) Inventeurs:
• **NIZET, Pierre**
  **63040 CLERMONT FERRAND CEDEX 9 (FR)**
• **PATURLE, Antoine**
  **63040 CLERMONT-FERRAND CEDEX 9 (FR)**

(74) Mandataire: **Béniguel, Jean-François Joseph Emile**
**Manufacture Française des Pneumatiques Michelin**
**Service juridique - Propriété Intellectuelle**
**DCJ/PI - F35 - Site de Ladoux**
**23, place des Carmes - Déchaux**
**63040 Clermont-Ferrand Cedex 9 (FR)**

(56) Documents cités:
**EP-A1- 2 937 232      WO-A1-2012/091719**
**WO-A1-2018/003942**

EP 3 880 498 B1

**Description**

DOMAINE TECHNIQUE GENERAL ET CONTEXTE DE L'INVENTION

La présente invention concerne la détermination de conditions de roulage d'un pneumatique sur un sol. Plus précisément, l'invention propose de déterminer la charge appliquée sur un pneumatique au moyen d'un signal de mesure représentatif de la courbure circonférentielle du pneumatique et de la pression à l'intérieur du pneumatique.

Il s'avère utile en effet de connaître à tout instant les conditions de roulage d'un pneumatique sur un sol, pour interagir avec le conducteur ou avec les systèmes d'assistance à la conduite, de manière à les informer en temps réel de l'évolution des conditions de roulage, et éventuellement de réagir à celles-ci. En effet, dans un véhicule monté sur roues, les pneumatiques représentent généralement les seuls points de contact avec le sol, par où s'exercent les principales interactions mécaniques du véhicule avec son environnement.

La charge est importante dans la mesure où elle affecte la durée de vie du pneumatique. Ainsi, il peut être souhaitable de surveiller les niveaux de charge d'un pneumatique afin de s'assurer que le pneumatique est utilisé dans des conditions de sécurité satisfaisante, notamment aux regards d'autres facteurs tels que la vitesse du véhicule ou la capacité de charge du pneumatique. De plus, la charge du pneumatique peut être surveillée pour déterminer d'autres caractéristiques relatives à l'usure du pneumatique, par exemple en utilisant un historique des charges pour mieux estimer une usure du pneumatique et décider de son remplacement au moment le plus opportun. De plus, des actions peuvent être entreprises pour adapter les conditions de roulage à la charge. Par exemple, la pression d'un pneumatique peut être modifiée pour être adaptée à la charge s'appliquant sur le pneumatique.

La demande de brevet WO2012091719 (A1) décrit un procédé comprenant une mesure d'une pression interne au pneumatique par un capteur placé à l'intérieur du pneumatique et la détermination d'un paramètre angulaire représentatif de la longueur d'une surface de contact avec le sol lors d'un tour de roue du pneumatique à partir d'un signal de mesure représentatif de l'évolution de la courbure du pneumatique au cours du roulement. La charge du pneumatique est ensuite déterminée à partir d'une table de correspondance regroupant différentes combinaisons du paramètre angulaire et de la pression du pneumatique. Toutefois, le procédé proposé permet de déterminer la charge uniquement sur route (sol très ferme comme le bitume d'une route), et manque de fiabilité lorsque différents types de sols sont rencontrés il n'est pas applicable en l'état sur les sols meubles par exemple de type sol agraire ou les sols rencontrés par les véhicules de type 4x4 ou militaire.

La demande de brevet EP2937232 un procédé pour déterminer une charge d'une roue d'un véhicule, caractérisé en ce qu'il comprend les étapes suivantes :

- détermination d'au moins une donnée, dite d'empreinte, relative à une surface de contact entre ladite roue et le sol ;
- calcul de la charge de ladite roue à partir d'une relation prédéterminée reliant ladite au moins une donnée d'empreinte à ladite charge. Elle concerne également un dispositif mettant en oeuvre un tel procédé, une roue équipée d'un tel dispositif, et un procédé et un système de caractérisation d'un véhicule.

La demande de brevet WO2018/003942 décrit une méthode pour déterminer l'état de surface d'une route à partir d'une forme d'onde des vibrations durant un trajet, déterminé par des moyens de détection de vibration et par des informations d'état du pneumatique servant à corriger un paramètre dérivé de la forme d'onde des vibrations.

PRESENTATION DE L'INVENTION

Un but de l'invention est de permettre de déterminer en temps réel la charge s'exerçant sur un pneumatique monté sur un véhicule en prenant en compte la fermeté du sol sur lequel roule le pneumatique. L'invention est définie dans les revendications indépendantes 1, 13 et 14 ci-jointes à la description de celle-ci.

A cet effet, il est proposé un procédé de détermination de la charge d'un pneumatique monté sur un véhicule et roulant sur le sol, ledit pneumatique étant muni d'un capteur configuré pour acquérir un signal de mesure représentatif de l'évolution de la courbure du pneumatique lors du roulement sur un sol, le procédé comprenant les étapes suivantes :

- acquisition par le capteur d'un signal de mesure représentatif de l'évolution de la courbure du pneumatique au cours du roulement,
- obtention d'une mesure de pression interne du pneumatique,
- détermination à partir du signal de mesure de données de mesure comprenant - un premier paramètre représentatif d'une longueur d'une surface de contact avec le sol lors d'un tour de roue du pneumatique,
- obtention d'un facteur de fermeté représentatif d'un état de fermeté du sol, tel que meuble ou dur, dérivé de mesures effectuées pendant que le pneumatique roule sur ledit sol,
- détermination de la charge du pneumatique en fonction du premier paramètre, du facteur de fermeté et de la pression interne du pneumatique

Le procédé permet de déterminer en temps réel la charge d'un pneumatique monté sur un véhicule, de façon simple, précise et fiable quel que soit l'état de fermeté du sol sur lequel roule le pneumatique, à partir d'un signal de mesure représentatif de l'évolution de la courbure du pneumatique.

Ce procédé est avantageusement complété par les caractéristiques suivantes, prises seules ou en une quelconque de leur combinaison techniquement possible :

- la charge du pneumatique est déterminée en utilisant une relation liant ladite charge, la pression, le facteur de fermeté, et le premier paramètre ;
- la relation lie ladite charge, un logarithme du premier paramètre (KL), un logarithme du facteur de fermeté et un logarithme de la pression, et est de la forme :

$$Z = d + e \log_{10}(P) + f \log_{10}(KL) + g \log_{10}(F)$$

avec Z un facteur de charge, P la pression interne du pneumatique, KL le premier paramètre, F le facteur de fermeté, et d, e, f, g des coefficients réels non nuls fixes préalablement déterminés ;
- lors du roulement, au cours d'un tour de roue, la courbure du pneumatique évolue selon un cycle présentant une partie hors contact avec le sol se caractérisant sur le signal de mesure par une courbure stable, une partie en contact avec le sol se caractérisant sur le signal de mesure par un pic de variation de courbure de contact, une transition dite transition d'entrée entre la partie hors contact avec le sol et la partie en contact avec le sol, se caractérisant sur le signal de mesure par un pic de variation de courbure d'entrée opposé au pic de variation de courbure de contact, et une transition dite de sortie entre la partie en contact avec le sol et la partie hors contact avec le sol, se caractérisant sur le signal de mesure par un pic de variation de courbure de sortie opposé au pic de variation de courbure de contact, le premier paramètre étant déterminé à partir d'une distance entre le pic de variation de courbure d'entrée et le pic de variation de courbure de sortie ;
- les données de mesure comprennent un deuxième paramètre déterminé à partir du signal de mesure, représentatif d'une vitesse de mise à plat du pneumatique lors du contact avec le sol lors d'un tour de roue du pneumatique, et dans lequel le facteur de fermeté est déterminé à partir du premier paramètre et du deuxième paramètre ;
- lors du roulement, au cours d'un tour de roue, la courbure du pneumatique évolue selon un cycle présentant une partie hors contact avec le sol et une partie en contact avec le sol, le premier paramètre étant déterminé à partir d'une partie du signal de mesure correspondant à la partie en contact avec le sol, et le deuxième paramètre est déterminé à partir d'une partie du signal de mesure correspondant à une transition de la courbure du pneumatique entre la partie hors contact avec le sol et la partie en contact avec le sol ;
- le deuxième paramètre est déterminé par une pente entre le pic de variation de courbure d'entrée et le pic de variation de courbure de contact ;
- le facteur de fermeté du sol est déterminé en utilisant une relation liant le facteur de fermeté du sol, le premier paramètre et le deuxième paramètre ;
- la relation liant le facteur de fermeté du sol, le premier paramètre (KL) et le deuxième paramètre (KS) est une relation linéaire, et est de la forme :

$$F = a + b \times KL + c \times KS$$

avec F le facteur de fermeté, KL le premier paramètre, KS le deuxième paramètre, et a, b, c des coefficients fixes préalablement déterminés ;
- la charge du pneumatique est déterminée en utilisant une relation liant ladite charge, un logarithme du premier paramètre, un logarithme du deuxième paramètre et un logarithme de la pression ;
- la relation est de la forme :

$$Z = d + e \log_{10}(P) + f \log_{10}(KL) + g \log_{10}(a + b \times KL + c \times KS)$$

avec Z un facteur de charge, KL le premier paramètre, KS le deuxième paramètre, et a, b, c, d, e, f, g des coefficients réels non nuls fixes préalablement déterminés ;
- la charge est déterminée en calculant un facteur de charge à partir du premier paramètre, du deuxième paramètre, et de la pression, et en comparant ledit facteur de charge à des seuils délimitant des classes de charge.

L'invention concerne également un pneumatique comprenant un capteur de pression interne au pneumatique et un capteur sensible à l'évolution de la courbure du pneumatique, configuré pour générer un signal de mesure représentatif de l'évolution de la courbure du pneumatique lors du roulement sur un sol, comprenant une partie active et une carte électronique, la partie active étant configurée pour générer le signal de mesure, la carte électronique étant configurée pour déterminer des données de mesure comprenant :

a) un premier paramètre représentatif d'une longueur d'une surface de contact avec le sol lors d'un tour de roue du pneumatique, et
b) un deuxième paramètre représentatif d'une vitesse de mise à plat du pneumatique lors du contact avec le sol lors d'un tour de roue du pneumatique,

le capteur étant configuré pour transmettre les données de mesure à l'extérieur du pneumatique.

L'invention concerne également une unité de traitement de données configurée pour recevoir une mesure de pression et des données de mesure dérivées d'un signal de mesure représentatif de l'évolution de la courbure du pneumatique lors du roulement sur un sol, lesdites données de mesure comprenant :

a) un premier paramètre représentatif d'une longueur d'une surface de contact avec le sol lors d'un tour de roue du pneumatique, et
b) un deuxième paramètre représentatif d'une vitesse de mise à plat du pneumatique lors du contact avec le sol lors d'un tour de roue du pneumatique,

l'unité de traitement de données étant configurée pour déterminer la charge du pneumatique en fonction du premier paramètre, du deuxième paramètre, et de la pression.

L'invention concerne également un véhicule comprenant :

- au moins un pneumatique,
- au moins capteur sensible à l'évolution de la courbure du pneumatique, configuré pour générer un signal de mesure représentatif de l'évolution de la courbure du pneumatique lors du roulement sur un sol,
- au moins une sonde de pression adaptée pour fournir une mesure de pression interne du pneumatique,
- une unité de traitement de données configurée pour recevoir la mesure de pression interne du pneumatique et des données de mesure dérivées du signal de mesure représentatif de l'évolution de la courbure du pneumatique lors du roulement sur un sol et pour déterminer un état de fermeté du sol, tel que meuble ou dur, en fonction des données de mesure, les données de mesure comprenant :

a) un premier paramètre représentatif d'une longueur d'une surface de contact avec le sol lors d'un tour de roue du pneumatique, et
b) un deuxième paramètre représentatif d'une vitesse de mise à plat du pneumatique lors du contact avec le sol lors d'un tour de roue du pneumatique,

le véhicule étant configuré pour mettre en oeuvre le procédé selon l'invention.

L'invention concerne également un produit programme d'ordinateur comprenant des instructions de code de programme pour l'exécution du procédé selon l'invention, lorsque ledit programme est exécuté sur un ordinateur. Le produit programme d'ordinateur peut prendre la forme d'un support non transitoire lisible par un ordinateur stockant des instructions de code pour l'exécution du procédé selon l'invention, lorsque ledit support non transitoire lisible par un ordinateur est lu par un ordinateur.

DESCRIPTION BREVE DES DESSINS

D'autres caractéristiques, buts et avantages de l'invention ressortiront de la description qui suit, qui est purement illustrative et non limitative, et qui doit être lue en regard des dessins annexés parmi lesquels :

- la Fig. 1 illustre de façon schématique un pneumatique monté sur une jante d'un véhicule ;
- la Fig. 2 présente un exemple d'un signal de mesure enregistré par un capteur sensible à la courbure du pneumatique lorsque le pneumatique roule ;

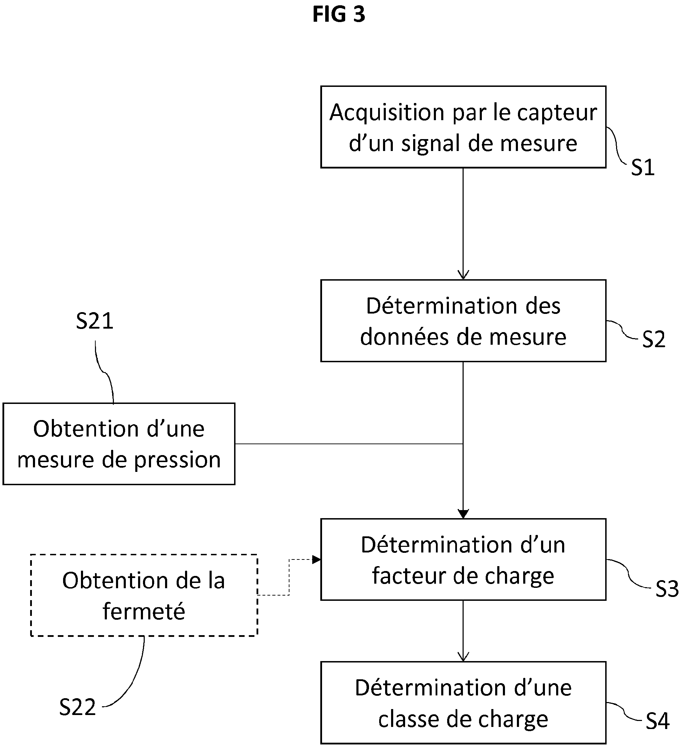

- la Fig. 3 présente un synoptique des étapes de la méthode d'évaluation de la fermeté d'un sol selon un mode de réalisation possible de l'invention ;
- la Fig. 4 montre un exemple d'analyse statistique en deux dimensions selon les deux paramètres dérivés du signal de mesure pour un pneumatique avant d'un véhicule selon différents états de fermeté du sol ;

- la Fig. 5 montre un exemple d'analyse discriminante en une dimension pour un pneumatique avant d'un véhicule ;
- la Fig. 6 montre un exemple d'analyse statistique en deux dimensions selon les deux paramètres dérivés du signal de mesure d'un véhicule pour plusieurs configurations de pressions internes et de charges d'un pneumatique arrière sur route (sol très dur);
- la Fig. 7 montre un exemple d'analyse statistique en deux dimensions selon les deux paramètres dérivés du signal de mesure d'un véhicule pour plusieurs configurations de pressions internes et de charges d'un pneumatique arrière sur une terre meuble ;
- la Fig. 8 montre un exemple de classification de la charge ;
- la Fig. 9 montre un exemple de classification de la fermeté des sols.

DESCRIPTION DETAILLEE

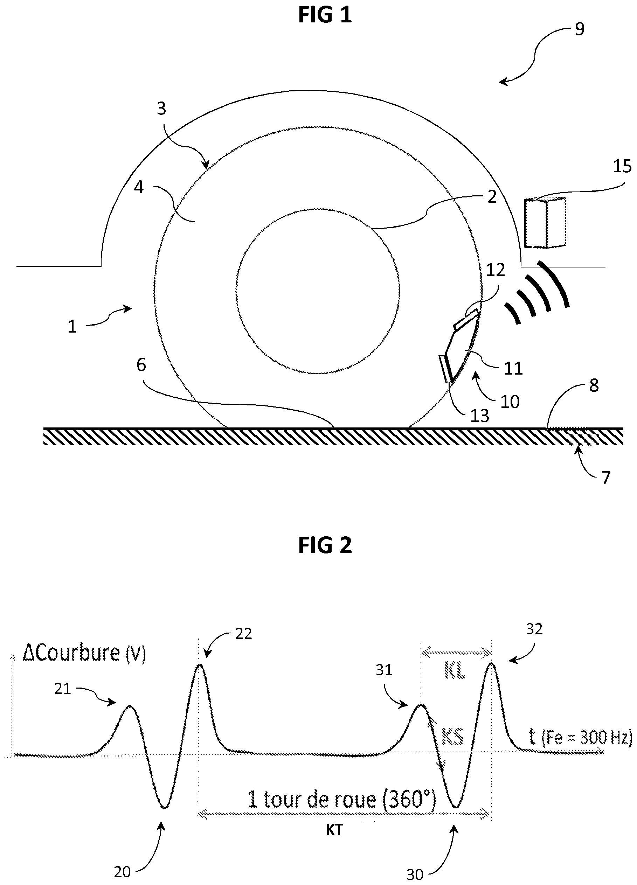

La Fig. 1 illustre un pneumatique 1 monté sur une jante 2. Un tel pneumatique 1 comprend d'une part une zone sommet 3 constituant une bande de roulement présentant des sculptures, et d'autre part des flancs 4 se terminant par des zones basses. Celles-ci comportent généralement une tringle et un talon pour permettre le montage du pneumatique 1 sur la jante 2. La jante 2 est elle-même reliée au véhicule 9 par un essieu (non représenté). Le pneumatique 1 permet ainsi la liaison entre le véhicule 9 et le sol 7.

On entend ainsi par pneumatique un solide souple conçu pour être monté sur la jante 2 d'une roue, généralement sous forme de bandage, afin d'assurer la liaison entre le véhicule 9 et le sol 7, comportant une bande de roulement subissant une modification de son rayon de courbure circonférentielle lorsqu'il est soumis à un effort. Le pneumatique 1 est typiquement formé d'élastomères (par exemple gomme) et éventuellement d'autres matériaux textiles et/ou métalliques. De préférence toutefois, un pneumatique 1 comprend une enveloppe flexible renfermant un intérieur gazeux sous pression, typiquement de l'air. Comme il s'agit du type le plus courant de pneumatique 1, la description qui suit est faite de manière non limitative en référence à un tel pneumatique 1 présentant une pression interne de gaz sous pression.

Le pneumatique 1 est soumis à une force appliquée par le véhicule 9, via l'essieu et la jante 2, en direction du sol 7. Cette force tire son origine de la charge à l'essieu, résultant du poids du véhicule 9. La jante 2 étant indéformable, cette force s'appliquant sur le pneumatique 1 déforme celui-ci lorsque le pneumatique 1 est au contact de la surface 8 du sol 7 : la partie du sommet 3 sous la jante 2 s'aplatit, ce qui augmente la surface de contact 6 du pneumatique 1 avec le sol, tandis que les flancs 4 se gonflent. Cette déformation est d'autant plus prononcée que la pression à l'intérieur du pneumatique est faible. La nature du sol 7 influe également sur cette déformation, et en particulier l'état de fermeté de ce sol 7. En effet, un sol dur ne se déforme pas ou peu, tandis qu'un sol mou se déforme sous l'action du pneumatique 1, de sorte que la déformation du pneumatique 1 est moindre, en partie transférée au sol 7.

La déformation du pneumatique 1 se traduit par une modification de la courbure circonférentielle du pneumatique 1, c'est-à-dire de la courbure de la zone sommet 3. Lorsque le pneumatique 1 roule, cette modification de la courbure parcourt la circonférence du pneumatique 1. Pour un point donné du pneumatique 1, la courbure va donc varier périodiquement à chaque tour de roue.

Le pneumatique 1 est muni d'un capteur 10 configuré pour acquérir un signal de mesure représentatif de l'évolution de la courbure du pneumatique 1. Ce capteur 10 est disposé à l'intérieur de l'enveloppe du pneumatique 1. De préférence, le capteur 10 est disposé contre la zone sommet 3. Le capteur 10 peut être enfoui dans la structure de l'enveloppe du pneumatique 10, ou bien être rapporté sur celle-ci, et par exemple maintenu en place par une couche adhésive. Le capteur 10 comporte une partie active 11 solidaire de l'enveloppe du pneumatique 1, de sorte que la déformation du pneumatique 1 entraîne une déformation correspondante de la partie active 11 du capteur 10, lequel génère un signal de mesure fonction de la déformation de sa partie active 11. Le signal de mesure est donc bien représentatif de l'évolution de la courbure du pneumatique.

De préférence, le capteur 10 est un capteur piézoélectrique, lequel génère une tension proportionnelle à la variation de flexion. Plus précisément, le capteur 10 peut par exemple comprendre une partie active 11 constituée d'une couche piézoélectrique entre deux couches conductrices. Il est également possible que le capteur 10 soit un capteur résistif, dont l'impédance est proportionnelle à la flexion de la partie active 11 du capteur. On peut également utiliser un accéléromètre, quoique d'utilisation bien plus complexe et demandant un traitement plus important. Le capteur 10 peut également être adapté pour mesurer d'autres paramètres, et en particulier la pression interne. Le capteur 10 peut être intégré dans un autre équipement électronique installé dans le pneumatique 1, tel qu'un capteur de pression et/ou de température de type TMS, de l'anglais "tyre monitoring system" pour "contrôle automatique du pneu".

Le capteur 10 comprend également une carte électronique 12 reliée à la partie active 11 du capteur 10 et configurée pour recevoir le signal de mesure en provenance de la partie active 11. Cette carte électronique 12 comprend au moins un processeur et une mémoire, et est adaptée pour traiter des données telles que le signal de mesure, pour déterminer des données de mesure à partir du signal de mesure, et pour communiquer ces données de mesure. De préférence, le capteur 10 est associé à un émetteur sans fil, notamment de type radiofréquence, et par exemple du type utilisant la technologie Bluetooth Low Energy (Bluetooth à basse énergie) ou du type appareil de faible puissance opérant dans la bande des 433 MHz (LPD 433), permettant de relayer le signal de mesure à une unité de traitement automatisée de données, de préférence disposée à l'extérieur du pneumatique 1, pour son traitement. L'émetteur sans fil peut faire partie du capteur 10, par exemple en tant que composant de la carte électronique 12, ou être distinct du capteur 10. On peut ainsi par exemple prévoir une antenne à l'intérieur du pneumatique 1. Dans le cas d'une communication sans fil, un récepteur externe peut recevoir les signaux envoyés par les moyens de communication sans fil associés au capteur 10, et les relayer à l'unité de traitement automatisée de données.

Bien entendu, le capteur 10 peut comprendre d'autres éléments permettant son bon fonctionnement, et notamment un module d'alimentation électrique, par exemple constitué par une batterie. De préférence, le pneumatique 1 comprend au moins une sonde de pression 13 adaptée pour fournir une mesure de pression intérieure du pneumatique, comme par exemple une TMS. Cette sonde 13 peut faire partie du capteur 10.

Lorsque le pneumatique 1 roule sur le sol, le capteur 10 acquiert (étape S1) le signal de mesure représentatif de l'évolution de la courbure circonférentielle du pneumatique. Ce signal de mesure peut être directement lié à la courbure (et donc être un signal de mesure de la courbure), et donc en suivre l'évolution, soit être indirectement lié à la courbure. C'est notamment le cas d'un capteur 10 dont la partie active 11 est un capteur piézoélectrique, puisque le signal de mesure correspond alors à la variation de la courbure. C'est ce type de capteur qui sera utilisé dans les exemples ci-après. Le signal de mesure, généré par la partie active 11 du capteur 10, est ensuite traité par la carte électronique 12 pour déterminer des données de mesure à partir du signal de mesure. Le traitement du signal de mesure vise à extraire les informations utiles dans ce signal, qui sont exploitées par la suite du procédé.

La Fig. 2 montre un exemple schématique d'un signal de mesure enregistré par un capteur 10 sensible à la variation de courbure du pneumatique lorsque le pneumatique 1 roule. Le signal de mesure est ici représenté par sa tension (en V), et désigné par Δcourbure, en fonction de la rotation de la roue exprimée en degré.

Lors du roulement, au cours d'un tour de roue, la courbure du pneumatique évolue selon un cycle présentant :

- une partie hors contact avec le sol,
- une partie en contact avec le sol.

La séquence illustre deux passages dans la partie en contact avec le sol de la zone du pneumatique 1 où est disposé le capteur 10, séparés par une partie de cycle hors contact avec le sol. La partie de cycle hors contact avec le sol se caractérise par une courbure stable, qui se traduit par une stabilité du signal de mesure proche du zéro. La partie du cycle en contact avec le sol se caractérise sur le signal de mesure par un pic de variation de courbure de contact 20, 30. Sur la Fig. 2, les pics de variation de courbure de contact 20, 30 sont dirigés le bas, correspondant à des pics de tension négatives. En effet, les pics de variation de courbure de contact 20, 30 correspondent à la mise à plat du pneumatique 1 dans la surface de contact 6.

La courbure présente également une transition dite transition d'entrée entre la partie hors contact avec le sol et la partie en contact avec le sol, se caractérisant sur le signal de mesure par un pic de variation de courbure d'entrée 21, 31 opposé au pic de variation de courbure de contact 20, 30, c'est-à-dire ici vers le haut. La variation de la courbure présente également une transition dite de sortie entre la partie en contact avec le sol et la partie hors contact avec le sol, se caractérisant sur le signal de mesure par un pic de variation de courbure de sortie 22, 32 opposé au pic de variation de courbure de contact, c'est-à-dire ici vers le haut. Le pic de variation de courbure d'entrée 21, 31 et le pic de variation de courbure de sortie 22, 32 correspondent aux variations brutales de rayon de courbure du pneumatique 1 en entrée et sortie de l'aire de contact.

Puisque le pneumatique tourne, le même cycle se répète, avec un signal de mesure stable hors contact avec le sol, puis un pic de variation de courbure d'entrée 21, 31, un pic de variation de courbure de contact 20, 30, un pic de variation de courbure de sortie 22, 32, et enfin de nouveau un signal de mesure stable hors contact avec le sol. Ce cycle correspond à un tour de roue, donc à 360°, représenté par la longueur KT sur la Fig. 2. Pour chaque cycle, le pic de variation de courbure de sortie 22, 32 présente le grand avantage d'être aigu et surtout essentiellement indépendant des conditions de sol et du pneumatique 1. En effet, le pic de variation de courbure de sortie 22, 32 correspond au changement de courbure du pneumatique 1 en sortie de l'aire de contact, quand la zone du pneumatique 1 où est située le capteur 10 passe brutalement de l'état plat caractéristique de la partie en contact avec le sol à l'état courbe caractéristique de la partie hors contact avec le sol. Sur un sol meuble, au fur et à mesure qu'il roule, le pneumatique 1 compacte le sol sous lui, formant une ornière, et donc un fond d'ornière assez ferme sur lequel le pneumatique 1 repose en sortie de l'aire de contact. Par ailleurs, l'avancement du véhicule 9 porte les contraintes essentiellement vers l'entrée de l'aire de contact. Le pneumatique 1 en sortie de l'aire de contact présente ainsi un comportement de sortie, en termes de courbure, très proche du comportement d'un pneumatique 1 sur une route.

Ainsi, il est aisé d'identifier chaque cycle correspondant à un tour de roue, en repérant chaque pic de variation de courbure de sortie 22, 32. Il est également possible d'identifier les cycles avec un dispositif dédié, tel qu'un compte-tour. A partir de là, les données peuvent être exprimées en fonction de degré angulaire de chaque cycle. Cela permet notamment de pouvoir comparer les cycles et leurs données indépendamment de la vitesse du véhicule 9. Les étapes du procédé ne requièrent qu'un cycle pour être mises en oeuvre, et peuvent donc être mises en oeuvre pour chaque cycle. Toutefois, afin de rendre le procédé plus robuste à d'éventuels aléas ponctuels (présence d'un caillou par exemple), il est possible d'utiliser une combinaison de plusieurs cycles mesurés, par exemple avec une moyenne glissante.

La charge et l'état de fermeté du sol influence les caractéristiques du profil du signal de mesure. L'invention vise donc à extraire des paramètres du signal de mesure pour en déduire la charge, en connaissant l'état de fermeté du sol. Le procédé comprend donc la détermination (étape S2), à partir du signal de mesure de données de mesure comprenant au moins un premier paramètre KL représentatif d'une longueur de l'aire de la surface de contact 6 avec le sol lors d'un tour de roue du pneumatique 1. Les données de mesure peuvent comprendre d'autres paramètres ou valeurs dérivées du signal de mesure. De préférence, les données de mesure comprennent également un deuxième paramètre KS représentatif d'une vitesse de mise à plat du pneumatique lors du contact avec le sol lors d'un tour de roue du pneumatique 1

Le premier paramètre KL est déterminé à partir d'une partie du signal de mesure correspondant à la partie en contact avec le sol. Plus précisément, le premier paramètre KL est déterminé à partir d'une distance entre le pic de variation de courbure d'entrée 31, et le pic de variation de courbure de sortie 32. S'agissant de deux maximums locaux dans le cycle, il est aisé d'identifier le sommet de chaque pic et d'en déduire leur distance, exprimée en degré. Comme le pic de variation de courbure d'entrée 31 et le pic de variation de courbure de sortie 32 correspondent respectivement au début et à la fin de la partie en contact avec le sol, le premier paramètre KL est bien fonction de l'aire du pneumatique 1 en contact avec le sol. De fait, KL correspond à la longueur de la surface de contact 6. Dans l'exemple, le signal de mesure s'exprimant en volt V en fonction des degrés angulaires °, le premier paramètre KL peut être exprimé en degré angulaire.

Le deuxième paramètre KS est déterminé à partir d'une partie du signal de mesure correspondant à une transition de la courbure du pneumatique entre la partie hors contact avec le sol et la partie en contact avec le sol. Plus précisément, le deuxième paramètre KS est déterminé par une pente entre le pic de variation de courbure d'entrée 31 et le pic de variation de courbure de contact 30. Plus précisément, le deuxième paramètre KS peut correspondre à la variation maximale de la variation de la courbure entre le pic de variation de courbure d'entrée 31 et le pic de variation de courbure de contact 30, c'est-à-dire correspondre à la pente maximale. Dans l'exemple, le signal de mesure s'exprimant en volt V en fonction des degrés angulaires °, le deuxième paramètre KS peut avoir pour unité des V/°, c'est-à-dire en dérivée seconde de la courbure du pneumatique 1.

KS peut être approximé de plusieurs façons. Par exemple, le deuxième paramètre KS peut correspondre au maximum (au sens de la valeur absolue) de la dérivée du signal de mesure entre le pic de variation de courbure d'entrée 31 et le pic de variation de courbure de contact 30, la dérivée étant estimée à partir de la différence entre deux points de mesure successifs (ou proches), en prenant évidemment en compte leur éloignement angulaire. S'agissant dans l'exemple d'une pente décroissante, ce maximum au sens de la valeur absolue correspond à un minimum de la dérivée du signal de mesure entre le pic de variation de courbure d'entrée 31 et le pic de variation de courbure de contact 30. Il est également possible, au lieu de rechercher une valeur extrémale de dérivée, de choisir des points de mesure fixes, comme par exemple ceux situés à équidistance des sommets du pic de variation de courbure d'entrée 31 et du pic de variation de courbure de contact 30, et de calculer la dérivée à partir de ces points. On peut encore prendre les points de mesure correspondant à une valeur de signal de mesure, comme par exemple le passage au zéro dans le cas illustré. Il est encore possible d'utiliser des approches plus complexes, comme par exemple l'algorithme de Savitzky-Golay. Toutefois, le choix d'une fréquence d'échantillonnage relativement faible, typiquement inférieure ou égale à 500 Hz, et de préférence inférieure ou égale à 400 Hz, comme les 300 Hz de l'exemple, revient à lisser le signal de mesure et permet de choisir des approches moins lourdes en calcul, tel que celles présentées plus haut.

Le premier paramètre KL et le deuxième paramètre KS ont l'avantage de présenter une grande variabilité en fonction de la fermeté du sol et de la charge, et d'être facilement obtenus, comme démontré ci-dessus. Plus précisément, lorsque la fermeté du sol diminue, le premier paramètre KL augmente tandis que le deuxième paramètre KS diminue. Ainsi, plus le sol est meuble, plus la longueur de la surface de contact 6 avec le sol 7 (représentée par le premier paramètre KL) augmente, tandis que la vitesse de mise à plat (représentée par le deuxième paramètre KS) diminue. A l'inverse, lorsque la fermeté du sol 7 augmente, le premier paramètre KL diminue tandis que et le deuxième paramètre KS augmente.

Pour une même fermeté de sol 7 et une même pression, quand la charge augmente, le premier paramètre KL augmente, tandis que le deuxième paramètre KS ne varie pratiquement pas. Ainsi, la connaissance de la fermeté du sol 7 ou du deuxième paramètre KS permet de distinguer les effets sur le premier paramètre KL de la variation de la charge des effets de la variation de la fermeté du sol 7. Ainsi, une fois connues la pression interne du pneumatique 1 et la fermeté du sol 7, il est possible de déterminer la charge du pneumatique 1 à partir du premier paramètre KL, quel que soit la vitesse et le glissement, de manière fiable pour tous les états de fermeté du sol 7, et non pas uniquement sur route.

La connaissance de la fermeté du sol 7 peut être fournie directement sous la forme d'un facteur de fermeté, dérivé par ailleurs de mesures (par exemple par le capteur 10 ou par d'autres capteurs) effectuées pendant que le pneumatique roule sur ledit sol. Il est par exemple possible de mettre en oeuvre une méthode d'évaluation de la fermeté d'un sol 7 sur lequel roule un véhicule ayant au moins un pneumatique monté présentant une rigidité radiale $k_{radial}$ comprenant une enveloppe pneumatique ayant un sommet 3, deux flancs 4 et deux bourrelets, équipée d'au moins un capteur 10 sensible à la courbure circonférentielle positionné au droit du sommet, comprenant les étapes suivantes :

- estimer une valeur de courbure $\rho_A$ de l'enveloppe pneumatique correspondant à un premier régime permanent de l'enveloppe pneumatique en contact avec le sol 7 ;
- évaluer la fermeté relative du sol 7 par rapport à la rigidité radiale $k_{radial}$ de l'ensemble monté comme une fonction de la valeur de courbure $\rho_A$ de l'enveloppe pneumatique.

Cette méthode d'évaluation de la fermeté d'un sol peut comprendre aussi les étapes suivantes :

- estimer une valeur de courbure $\rho_B$ de l'enveloppe pneumatique correspondant à un second régime permanent de l'enveloppe pneumatique hors du contact avec le sol ;
- évaluer la fermeté relative du sol par rapport à la rigidité radiale kradial de l'ensemble monté comme une fonction de la valeur de courbure $\rho_A$ dans le premier régime permanent et de la valeur de courbure $\rho B$ de l'enveloppe pneumatique dans le second régime permanent.

Plus précisément, la méthode d'évaluation de la fermeté d'un sol comprend les étapes suivantes :

- établir la courbure relative C comme le rapport $\rho_A/\rho_B$ ;
- évaluer la fermeté relative du sol par rapport à la rigidité radiale $k_{radial}$ de l'ensemble monté comme une fonction de la courbure relative C.

En particulier, le lien entre la fermeté relative du sol par rapport à la rigidité radiale $k_{radial}$ de l'ensemble monté peut être donné par la formule suivante :

$$\frac{k_{sol}}{k_{radial}} = \frac{|1 + \alpha * C - (1 + \alpha) * C^2|}{\beta * C},$$

dans laquelle $\beta$ est une fonction polynomiale de la pression interne de gonflage P de l'ensemble monté du type suivant : $\beta = \beta_1 * (P)^{\beta_2}$. Les coefficients $\alpha$, $\beta_1$ et $\beta_2$ sont des coefficients dépendants du pneumatique monté.

Il est également possible de déterminer la fermeté du sol à partir du premier paramètre KL et du deuxième paramètre KS. Pris individuellement, le premier paramètre KL et/ou le deuxième paramètre KS peuvent dépendre en outre de la charge, de la pression, et/ou de la vitesse. Toutefois, la prise en compte à la fois du premier paramètre KL et du deuxième paramètre KS permet de déterminer la fermeté du sol à partir de ces seuls paramètres, sans connaître la charge, la pression, la vitesse, et le glissement du pneumatique 1 sur le sol.

De préférence, c'est la carte électronique 12 du capteur 10 qui détermine à partir du signal de mesure les données de mesure comprenant le premier paramètre KL et le deuxième paramètre KS. Ces données de mesure sont ensuite transmises par le capteur 10 à une unité de traitement de données 15 qui met en oeuvre la suite du procédé. Cette unité de traitement de données 15 est de préférence disposée à l'extérieur du pneumatique 1, par exemple dans le véhicule 9 mais l'unité de traitement 15 peut également être distante du véhicule 9, et la transmission des données peut alors faire intervenir des moyens de transmission intermédiaires. La transmission des données de mesure entre le capteur 10 et l'unité de traitement de données 15 se fait alors de manière sans fil. L'unité de traitement de données 15 comprend typiquement un processeur et une mémoire, et est adaptée pour recevoir et pour traiter les données de mesure lors de la mise en oeuvre de la suite du procédé de la détermination de la charge du pneumatique et éventuellement la fermeté du sol.

Il est possible de transmettre le signal de mesure à l'unité de traitement 15 pour la mise en oeuvre de la suite du procédé. Toutefois, la détermination des données de mesure par le capteur 10 et la transmission de ces seules données de mesure vers l'unité de traitement de données 15 présente l'avantage de réduire la quantité de données transmises entre le capteur 10 et l'unité de traitement de données 15. La transmission de données consommant beaucoup d'énergie, transmettre les données de mesure plutôt que le signal de mesure permet de limiter la consommation électrique du capteur 10, dont les possibilités d'alimentation dans le pneumatique 1 sont limitées.

Il est par ailleurs avantageux de ne pas utiliser la carte électronique 12 du capteur 10 pour la mise en oeuvre de la suite du procédé, mais plutôt d'utiliser l'unité de traitement de données 15 pour traiter les données de mesure. On limite ainsi les calculs effectués par la carte électronique 12 du capteur 10, ce qui permet d'économiser de l'énergie et de la mémoire au niveau de la carte électronique 12. De plus, il est plus aisé de modifier les modalités de mise en oeuvre de la suite du procédé sur une unité de traitement de données 15 facilement accessible, plutôt que sur le capteur 10 à l'intérieur du pneumatique 1.

La mesure de pression interne du pneumatique, déterminée par la sonde de pression 13, peut être transmise directement à l'unité de traitement 15, ou bien être transmise à la carte électronique 12 du capteur 10, qui la transmet alors à l'unité de traitement 15. De préférence, cette transmission est faite en association avec les données de mesure.

Une fois que l'unité de traitement 15 a reçu les données de mesure et la mesure de pression interne du pneumatique, l'unité de traitement 15 peut déterminer la charge du pneumatique 1 à partir de la mesure de pression interne du pneumatique, du premier paramètre KL et du facteur de fermeté. Préalablement, si le facteur de fermeté n'est pas fourni, il est possible de déterminer la fermeté du sol en fonction du premier paramètre KL et du second paramètre KS contenus dans les données de mesure, qui varient en fonction de la fermeté du sol, comme montré ci-dessous.

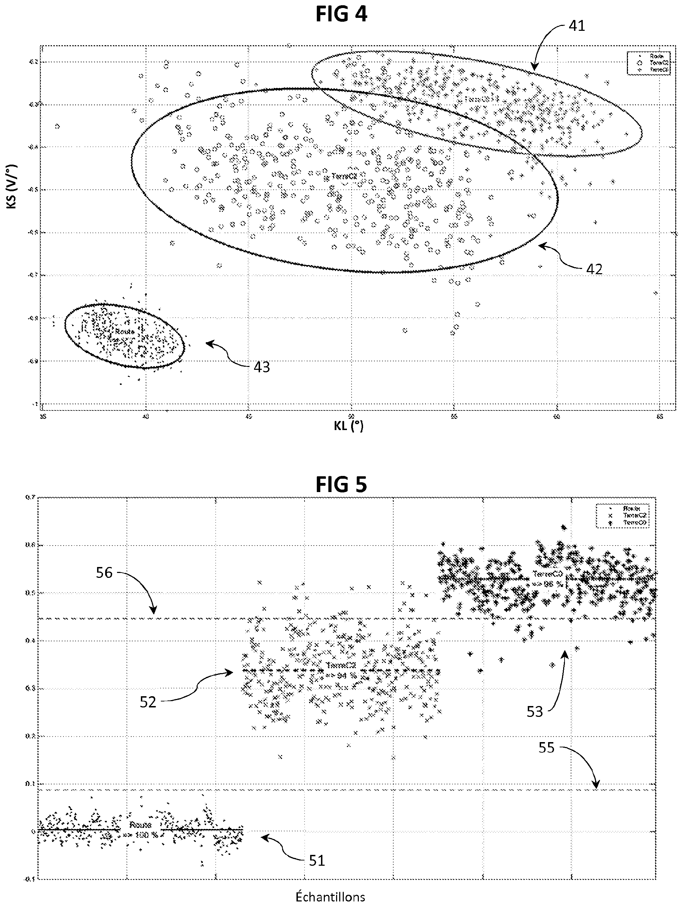

La Fig. 4 un exemple d'analyse statistique en deux dimensions selon les deux paramètres KL et KS dérivés du signal de mesure pour un pneumatique 1 d'un véhicule 9 roulant sur un sol 7 dont la fermeté est connue. Dans cet exemple, les données de mesure dérivent d'un signal de mesure acquis par un capteur 10 piézoélectrique disposé dans un pneumatique avant d'un tracteur agricole lors d'un roulement sur un même sol présentant trois configurations de fermeté différentes

- C0 (sol très meuble) : terre brute de labourage suivie d'un hersage,
- C2 (sol assez meuble) : terre brute de labourage suivie d'un hersage compactée deux fois par le passage d'un pneumatique 1 (par les roues avant et arrière d'un véhicule 9, correspondant donc à un passage de véhicule 9),
- route (sol dur) : surface bitumée.

Il est à noter que les points de mesure regroupent des charges, des pressions et des vitesses (inférieures à 20 km/h) variées.

Les points de mesure sont exprimés en fonction du premier paramètre KL (en abscisse et en degré angulaire) et du second paramètre KS (en ordonnée et en V/°). Ces valeurs dépendent évidemment du type de pneumatique 1 et du capteur 10 utilisés. Les croix correspondent à un roulement sur sol très meuble C0, et sont regroupées dans un premier ellipsoïde de confiance 41 à 95%. Les cercles correspondent à un roulement sur sol assez meuble C2, et sont regroupés dans un deuxième ellipsoïde de confiance 42 à 95%. Les points correspondent à des points de mesure lorsque roulement sur une route (sol très ferme), et sont regroupés dans un troisième ellipsoïde de confiance 43 à 95%. Les exemples de la Fig. 4 donnent ainsi une indication sur les grandeurs prises par les paramètres KL et KS. Par exemple, sur route, le second paramètre KS est compris entre - 0,7 V/° et -1 V/°, tandis que le premier paramètre KL est compris entre 35° et 43°.

On constate que le troisième ellipsoïde de confiance 43 est nettement séparé des deux autres. Les deux paramètres KL et KS permettent donc d'identifier facilement un sol très dur tel que la route. On constate également que si le premier ellipsoïde de confiance 41 et le second ellipsoïde de confiance 42 se recouvrent un peu, ils sont néanmoins très suffisamment disjoints pout permettre de distinguer un point de mesure avec un sol C0 d'un point de mesure avec un sol C2. Ainsi, la prise en compte combinées des paramètres KL et KS permet d'identifier l'état de fermeté du sol, malgré des charges, des pressions et des vitesses variées.

Plus précisément, les données de mesure comprenant les paramètres KL et KS sont utilisées pour analyser le signal de mesure afin de déterminer à quelle classe de fermeté appartient le sol sur lequel roule le pneumatique 1. L'utilisation de classes permet de faciliter et de simplifier l'éventuel retour d'information au conducteur ou l'exploitation par un système automatisé, tout en gommant des fluctuations et imprécisions de mesure. L'utilisation de classe de fermeté n'est pas obligatoire, puisqu'il est possible d'exprimer la fermeté au moyen d'une grandeur numérique, comme par exemple un pourcentage, mais il s'agit cependant du mode de réalisation préférentiel qui est présenté ci-dessous.

A titre d'exemple illustratif et non limitatif, les classes suivantes peuvent être utilisées :

[Table 1]

| Classe | D0 | D1 | D2 | D3 | D4 | D5 |
|---|---|---|---|---|---|---|
| Etat de fermeté | Très meuble | Meuble | Semi-meuble | Semi-dur | Dur | Très dur |
| Exemple | Terre C0 | Terre C1 | Terre C2 ou C3 | herbe | chemin | route |

Dans ce tableau, terre C0 est la terre brute de labourage suivie d'un hersage, terre C1 est la terre C0 compactée par un passage de roue (uniquement par la roue avant), terre C2 est la terre C0 compactée par deux passages de roue (par la roue avant et par la roue arrière), terre C3 est la terre C0 compactée par trois passages de roue (par la roue avant, par la roue arrière, puis encore par la roue avant). Il est à noter que les terres C2 et C3 (et éventuellement suivantes) sont regroupés dans la même classe car la terre arrive très vite à sa compacité maximale au passage d'un véhicule 9. Ces classes présentent l'avantage de rendre compte des effets respectifs sur la fermeté du sol du passage des roues avant et des roues arrière. Bien entendu, d'autres classes pourraient être utilisées. Il serait par exemple possible d'utiliser des classes encore plus meubles, par exemple représentative d'un sol très meuble boueux, voire avec un défaut de portance.

La fermeté du sol est donc déterminée en utilisant une relation liant la fermeté du sol, le premier paramètre KL et le deuxième paramètre KS. Ainsi, après avoir été déterminés, le premier paramètre KL et le deuxième paramètre KS sont utilisés pour déterminer un facteur de fermeté au moyen de cette relation. Ainsi, en notant F le facteur de fermeté, et $f_F$ une fonction correspondant à la relation et portant sur le premier paramètre KL et le deuxième paramètre KS, on peut écrire :

$$F = f_F(KL, KS)$$

De préférence, cette relation est une relation linéaire. Plus précisément, la relation linéaire peut être de la forme :

$$F = a + b \times KL + c \times KS$$

avec F le facteur de fermeté, KL le premier paramètre, KS le deuxième paramètre, et a, b, c des coefficients réels non nuls fixes préalablement déterminés. La relation peut être bilinéaire, et donc être du type :

$$F = a + b \times KL + c \times KS + m \times \mathrm{KL} \times \mathrm{KS}$$

avec a, b, c, et m des coefficients réels non nuls fixes préalablement déterminés.

Il est à noter que la relation liant la fermeté du sol, le premier paramètre KL et le deuxième paramètre KS peut bien évidemment prendre en compte d'autres paramètres, et en particulier peut prendre en compte la pression d'un pneumatique, la vitesse, ou encore la longueur KT (tour de roue).

Les coefficients fixes a, b, c, et m sont de préférence choisis afin de maximiser la discrimination de classes de fermeté du sol. On peut par exemple utiliser une analyse discriminante à une dimension. Cette analyse discriminante vise à maximiser les écarts entre les centres de gravité de chacune des classes de fermeté du sol, tout en minimisant la dispersion intra-classe.

La Fig. 5 montre un exemple d'analyse discriminante en une dimension pour un pneumatique 1 avant d'un véhicule 9, pour les mêmes données que celles de la Fig. 4. Les échantillons (1388 exactement) sont regroupés par configuration de roulement selon l'axe des abscisses, tandis que l'axe des ordonnées correspond à l'axe discriminant. Les points de mesure ont été relevés avec trois configurations différentes d'état de fermeté. Un premier ensemble 51 de points de mesure regroupe les points de mesure relevés sur route, un deuxième ensemble 52 de points de mesure regroupe les points de mesure relevés sur une terre très meuble, correspondant à la configuration terre C0, un troisième ensemble 53 de points de mesure regroupe les points de mesure relevés sur une terre semi-meuble, correspondant à la configuration terre C2. L'analyse discriminante sur les paramètres KL et KS consiste à combiner ces deux paramètres pour en déduire un troisième qui correspond à un facteur de fermeté $F_{AD}$, qui correspond à l'ordonnée de chaque point de mesure. La relation est alors la suivante :

$$F_{AD} = 0{,}012516 \times KL + 0{,}57576 \times KS$$

En référence à la formule générale donnée plus haut, on a donc a=0, b=0,012516, et c=0,57576. Les valeurs des coefficients fixes dépendent bien évidemment du type de pneumatique, du capteur 10 utilisé, de sa disposition sur le pneumatique avant ou arrière, et des configurations de sol utilisées pour recueillir les données.

L'analyse discriminante permet de déterminer des seuils de classification séparant les différentes classes. Dans l'exemple de la Fig. 4, les seuils résultants sont représentés par des lignes horizontales en pointillés. Ainsi, une première ligne 55 départage la classe "route" de la classe "terre C2", avec un seuil de classification à 0,088066. Une seconde ligne 56 départage la classe "terre C2" de la classe "terre C0" avec un seuil de classification à 0,44572.

Ainsi, après avoir été déterminés, le premier paramètre KL et le deuxième paramètre KS sont utilisés pour déterminer un facteur de fermeté, et la classe de fermeté sur sol est déterminée en comparant ce facteur de fermeté à des seuils de classification. Dans cet exemple, la probabilité moyenne de détection correcte des trois classes (route, terre C2 et terre C0), monte à 97%, se répartissant comme suit :

- 100 % pour la classe route,
- 94% pour la classe terre C2,
- 96% pour la classe terre C0.

On obtient ainsi une excellente correspondance entre les classes de fermeté déterminées par le procédé et la fermeté réelle des configurations de sol des points de mesure.

Il est à noter que le comportement d'un pneumatique 1 monté à l'avant d'un véhicule 9 diffère du comportement d'un pneumatique 1 monté à l'arrière du véhicule 9, essentiellement à cause des dimensions respectives différentes d'un pneumatique 1 avant et d'un pneumatique 1 arrière, mais également en raison du tassement de la terre par le pneumatique 1 avant, renforçant la fermeté du sol sur lequel roule un pneumatique 1 arrière. Par conséquent, la relation liant la fermeté du sol, le premier paramètre KL et le deuxième paramètre KS peut être différente pour un pneumatique 1 avant et pour un pneumatique arrière. De préférence, le capteur 10 est placé dans un pneumatique 1 avant, rendant mieux compte de la fermeté effective du sol tel qu'il se présente avant d'être tassé par le roulement d'un pneumatique 1. Ainsi, avec la relation linéaire exprimée plus haut, les coefficients fixes a, b, c peuvent être différents en fonction de la position du capteur 10 dans un pneumatique 1 avant ou dans un pneumatique 1 arrière. De préférence encore, un capteur 10 est placé dans un pneumatique 1 avant et un autre capteur 10 est placé dans le pneumatique arrière qui suit ledit pneumatique avant (c'est-à-dire généralement du même côté du véhicule 9). Il est alors possible d'avoir deux relations linéaires, l'une pour le pneumatique avant et l'autre pour le pneumatique arrière :

$$\begin{cases} F_{AV} = a_{AV} + b_{AV} \times KL_{AV} + c_{AV} \times KS_{AV} \\ F_{AR} = a_{AR} + b_{AR} \times KL_{AR} + c_{AR} \times KS_{AR} \end{cases}$$

avec $F_{AV}$ la fermeté déterminée à partir des données de mesure du pneumatique avant, $KL_{AV}$ le premier paramètre pour le pneumatique avant, $KS_{AV}$ le deuxième paramètre pour le pneumatique avant, et $a_{AV}$, $b_{AV}$, $c_{AV}$ des coefficients fixes préalablement déterminés pour le pneumatique avant, et avec $F_{AR}$ la fermeté déterminée à partir des données de mesure du pneumatique arrière, $KL_{AR}$ le premier paramètre pour le pneumatique arrière, $KS_{AR}$ le deuxième paramètre pour le pneumatique arrière, et $a_{AR}$, $b_{AR}$, $c_{AR}$ des coefficients fixes préalablement déterminés pour le pneumatique arrière.

A titre d'exemple, on peut avoir les deux relations suivantes :

$$\begin{cases} F_{AV} = 0{,}012516 \times KL_{AV} + 0{,}57576 \times KS_{AV} \\ F_{AR} = 0{,}011622 \times KL_{AR} + 1{,}2213 \times KS_{AR} \end{cases}$$

Dans la mesure où les fermetés vues par le pneumatique avant et par le pneumatique arrière dérivent d'analyses discriminantes différentes, $F_{AV}$ et $F_{AR}$ ne sont pas directement sur les mêmes échelles. Il est cependant préférable de pouvoir comparer et exploiter en commun les fermetés déterminées à partir du pneumatique avant et du pneumatique arrière, en trouvant une échelle commune pour l'expression de ces deux fermetés. La classe "route" peut être choisi comme référence commune, dans la mesure où elle apparaît comme peu dispersée, ce qui permet de déterminer les transformations pour recaler les échelles. Il s'agit simplement de modifier les coefficients fixes a, b et c respectifs des deux relations.

On peut en outre exprimer ces fermetés en fonction de l'étalement des mesures : la fermeté la plus élevée des points de mesure peut alors correspondre à un extrême d'une échelle, tandis que la fermeté la plus basse des points de mesure peut alors correspondre à l'autre extrême de l'échelle. On peut par exemple utiliser des pourcentages pour exprimer la fermeté, avec 100% pour le facteur de fermeté le plus élevé et 0% pour le facteur de fermeté le plus faible. Là encore, il s'agit simplement de modifier les coefficients fixes a, b et c respectifs des deux relations.

En reprenant l'exemple des deux relations données plus haut, ces deux relations peuvent exprimer un facteur de fermeté en pourcentage, sur une même échelle :

$$\begin{cases} F(\%) = 90{,}03840 - 1{,}59822 \times KL_{AV} - 73{,}58853 \times KS_{AV} \\ F(\%) = 62{,}80775 - 1{,}48666 \times KL_{AR} - 156{,}23955 \times KS_{AR} \end{cases}$$

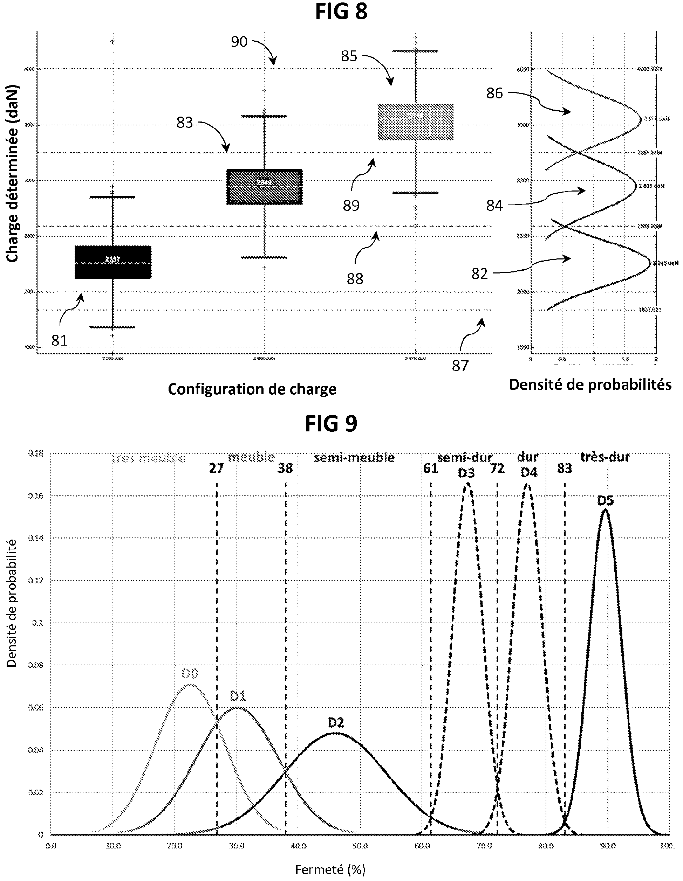

A titre d'exemple, la Fig. 9 monte une classification de la fermeté des sols en pourcentage selon les six classes du tableau Table 1, avec les seuils de classification représentés par des lignes verticales en tirets, et les indications des densités de probabilités pour chaque classe avec une modélisation par une loi normale.

On peut ainsi compléter le tableau Table 1 avec les seuils correspondants, pour donner le tableau suivant :

[Table 2]

| Classe | D0 | D1 | D2 | D3 | D4 | D5 |
|---|---|---|---|---|---|---|
| Etat de fermeté | Très meuble | Meuble | Semi-meuble | Semi-dur | Dur | Très dur |
| Étendue | 0 à 27% | 27 à 38% | 38 à 61% | 61 à 72% | 72 à 83% | 83 à 100% |
| Exemple | Terre C0 | Terre C1 | Terre C2 ou C3 | Herbe | Chemin | Route |

Ces classes sont préalablement déterminées, et stockées dans la mémoire de l'unité de traitement 15, qui stocke également la relation liant la fermeté du sol, le premier paramètre KL et le deuxième paramètre KS. Les classes peuvent être utilisées par l'unité de traitement 15 pour traiter les données de mesure pour le pneumatique 1 et le capteur 10 correspondant, afin de déterminer la classe de fermeté du sol sur lequel roule le pneumatique 1. Par exemple, si le facteur de fermeté (en pourcentage) F(%) calculé pour un couple de premier paramètre KL et de deuxième paramètre KS issus du signal de mesure est de 92%, cela signifie que le pneumatique 1 roule sur un sol très dur, comme une route, appartenant à la classe D5.

La connaissance de la fermeté présente de nombreux avantages. Par exemple, en présence d'un sol meuble, la pression de gonflage d'un pneumatique peut être baissée afin d'élargir l'aire de contact entre le pneumatique et le sol, afin de limiter le tassement de celui-ci.

Par ailleurs, la détermination locale de la fermeté du sol permet d'évaluer l'opportunité de mener ou non certaines opérations dépendantes de cet état de fermeté. Par exemple, le passage d'un engin dans une terre trop meuble peut dégrader le sol ou causer l'enlisement de l'engin. Le travail de la terre peut aussi être affecté par l'état de fermeté du sol.

En couplant des états de fermeté avec des données géolocalisations synchrones, il est possible d'établir une cartographie de la fermeté du sol d'une parcelle, éventuellement couplée avec d'autres caractéristiques du sol. Une telle cartographie peut s'avérer utilise pour déterminer un aménagement du sol de la parcelle, comme par exemple la mise en place d'un drainage du sol, un empierrement de celui-ci, ou un décompactage modulé en fonction des besoins du sol.

Des mesures appropriées peuvent alors être prises en fonction de la fermeté ainsi déterminée. Par exemple, dans le cas d'un tracteur agricole avec une transmission intégrale sans différentiel central, le pont avant peut être débrayé afin d'éviter l'usure sur un sol dur. A l'inverse, il est également possible par exemple de réduire la pression des pneumatiques lorsque le sol est très meuble, afin de limiter le marquage de celui-ci ou de réduire le risque d'enfouissement des roues.

Ces mesures peuvent être commandées par l'unité de traitement de données 15 qui a déterminé la fermeté du sol, notamment lorsqu'il s'agit d'une unité de commande centrale du véhicule 9. Il est également possible que l'unité de traitement de données 15 qui a déterminé la fermeté du sol se contente de transmettre l'information constituée par la fermeté du sol (exprimée selon une grandeur ou synthétisée sous la forme d'une indication de classe) à un autre organe de commande et/ou à un dispositif d'affichage afin d'en informer l'utilisateur.

Une fois la fermeté obtenue (étape S22), par la fourniture d'un facteur de fermeté ou par la détermination de ce facteur de fermeté comme décrit ci-dessus, il est possible de déterminer un facteur de charge (étape S3), comme décrit ci-dessous.

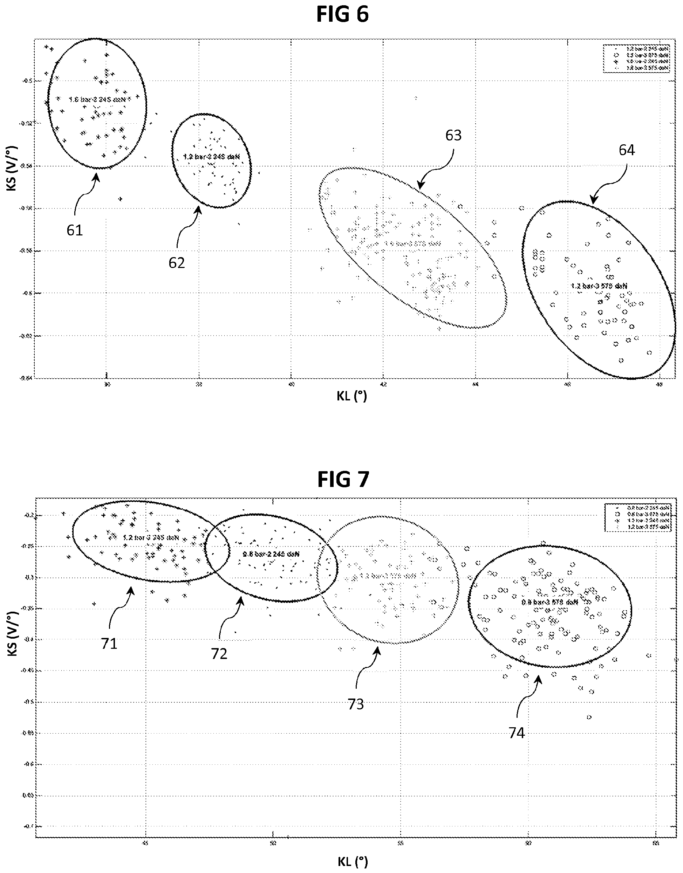

La Fig. 6 montre un exemple d'analyse statistique en deux dimensions selon les deux paramètres KL et KS dérivés du signal de mesure pour un pneumatique 1 d'un pneumatique 1 d'un véhicule 9 roulant sur un sol 7 constitué par une route, c'est-à-dire un sol très dur. Dans cet exemple, les données de mesure dérivent d'un signal de mesure acquis par un capteur 10 piézoélectrique disposé dans un pneumatique arrière d'un tracteur agricole lors d'un roulement sur route selon quatre configurations différentes de pression et de charge. Il est à noter que les points de mesure regroupent des vitesses (inférieures ou égales à 20 km/h) variées.

Les points de mesure sont exprimés en fonction du premier paramètre KL (en abscisse et en degré angulaire) et du second paramètre KS (en ordonnée et en V/°). Ces valeurs dépendent évidemment du type de pneumatique 1 et du capteur 10 utilisés. Un premier ellipsoïde 61 de confiance à 95% regroupe des points de mesures correspondant à un roulement à une pression interne de 1,6 bar et une charge de 2245 daN. Un deuxième ellipsoïde 62 de confiance à 95% regroupe des points de mesures correspondant à un roulement à une pression interne de 1,2 bar et une charge de 2245 daN. Un troisième ellipsoïde 63 de confiance à 95% regroupe des points de mesures correspondant à un roulement à une pression interne de 1,6 bar et une charge de 3575 daN. Un quatrième ellipsoïde 64 de confiance à 95% regroupe des points de mesures correspondant à un roulement à une pression interne de 1,2 bar et une charge de 3575 daN.

On constate que les ellipsoïdes 61, 62, 63, 64 sont nettement séparés sur l'axe du premier paramètre KL. Le premier paramètre KL diminue avec la pression, et augmente avec la charge. Ce seul premier paramètre KL pourrait donc, sur route, suffire à distinguer quatre classes de configurations pression-charge, et donc en connaissant la pression, à distinguer des classes de charge. Il est à noter toutefois que le deuxième paramètre KS varie également entre les configurations, bien que permettant moins bien que le premier paramètre KL de distinguer les différentes configurations. Le deuxième paramètre KS peut ainsi être utilisé pour affiner la discrimination obtenue avec le premier paramètre KL. C'est d'autant plus utile que le deuxième paramètre KS est sensible à la fermeté du sol 7, et que sa prise en compte permet donc de prendre en compte les effets de cette fermeté.

La Fig. 7 montre un exemple d'analyse statistique en deux dimensions selon les deux paramètres KL et KS dérivés du signal de mesure pour un pneumatique 1 d'un pneumatique 1 d'un véhicule 9 roulant sur un sol 7 constitué par une terre brute de labourage suivie d'un hersage, compactée par un passage de roue (uniquement par la roue avant), désignée plus haut comme terre C1. Comme dans l'exemple précédent, les données de mesure dérivent d'un signal de mesure acquis par un capteur 10 piézoélectrique disposé dans un pneumatique arrière d'un tracteur agricole lors d'un roulement selon quatre configurations différentes de pression et de charge. Il est à noter que les points de mesure regroupent des vitesses (inférieures à 20 km/h) variées. Par rapport aux configurations de la Fig. 6, les pressions sont moindres (1,2 bar et 0,8 bar contre respectivement 1,2 bar et 1,6 bar), car le roulement sur un sol meuble se fait généralement avec des pressions réduites.

Les points de mesure sont exprimés en fonction du premier paramètre KL (en abscisse et en degré angulaire) et du second paramètre KS (en ordonnée et en V/°). Ces valeurs dépendent évidemment du type de pneumatique 1 et du capteur 10 utilisés. Un premier ellipsoïde 71 de confiance à 95% regroupe des points de mesures correspondant à un roulement à une pression interne de 1,2 bar et une charge de 2245 daN. Un deuxième ellipsoïde 72 de confiance à 95% regroupe des points de mesures correspondant à un roulement à une pression interne de 0,8 bar et une charge de 2245 daN. Un troisième ellipsoïde 73 de confiance à 95% regroupe des points de mesures correspondant à un roulement à une pression interne de 1,2 bar et une charge de 3575 daN. Un quatrième ellipsoïde 74 de confiance à 95% regroupe des points de mesures correspondant à un roulement à une pression interne de 0,8 bar et une charge de 3575 daN.

On constate que les ellipsoïdes 71, 72, 73, 74 sont moins distinctement séparés sur l'axe du premier paramètre KL, certains ellipsoïdes se recouvrant même partiellement. De plus, par rapport à la Fig. 6, les valeurs du premier paramètre KL ont sensiblement varié. Par exemple, l'ellipsoïde 62 correspondant à la configuration 1,2 bar de pression et 2245 daN de charge était inscrite dans des valeurs du premier paramètre KL comprises entre 37° et 39°, alors que l'ellipsoïde 71 correspondant aussi à la configuration 1,2 bar de pression et 2245 daN de charge est inscrite dans des valeurs du premier paramètre KL comprises entre 42° et 47,5°. De même, l'ellipsoïde 64 correspondant à la configuration 1,2 bar de pression et 3575 daN de charge était inscrite dans des valeurs du premier paramètre KL comprises entre 45° et 48°, alors que l'ellipsoïde 73 correspondant aussi à la configuration 1,2 bar de pression et 3575 daN de charge est inscrite dans des valeurs du premier paramètre KL comprises entre 52° et 57°.

Par conséquent, la prise en compte de la fermeté du sol apparaît comme essentielle pour déterminer de façon fiable la charge d'un pneumatique à partir du premier paramètre KL des données de mesure. Plus précisément, les données de mesure comprenant le premier paramètre KL sont utilisées pour analyser le signal de mesure afin de déterminer à quelle classe de charge est soumis le pneumatique 1. L'utilisation de classes permet de faciliter et de simplifier l'éventuel retour d'information au conducteur ou l'exploitation par un système automatisé, tout en gommant des fluctuations et imprécisions de mesure. L'utilisation de classe de charge n'est pas obligatoire, puisqu'il est possible d'exprimer la charge au moyen d'une grandeur numérique, comme par exemple un pourcentage, mais il s'agit cependant du mode de réalisation préférentiel qui est présenté ci-dessous.

La charge du pneumatique est déterminée en utilisant une relation liant ladite charge, la pression P, le facteur de fermeté F, et le premier paramètre KL :

$$Z = f_z(P, KL, F)$$

avec Z un facteur de charge et $f_z$ une fonction.

Cette relation peut être une relation linéaire, voire bilinéaire, du type :

$$Z = a_c + b_c.P + c_c.KL + d_c.F + e_c.P.KL + f_c.KL.F + g_c.P.KL.F$$

avec $a_c$, $b_c$, $c_c$, $d_c$, $e_c$, $f_c$, $g_c$ des coefficients réels non nuls préalablement prédéterminés. Les coefficients $a_c$, $b_c$, $c_c$, $d_c$, $e_c$, $f_c$, $g_c$ peuvent être fixes pour toutes les conditions, ou peuvent éventuellement dépendre du facteur de fermeté F. En particulier, au moins un premier jeu de paramètres $a_c$, $b_c$, $c_c$, $d_c$, $e_c$, $f_c$, $g_c$ peut être utilisé pour un sol présentant un facteur de fermeté inférieur à une valeur seuil, et au moins un second jeu de paramètres $a_c$, $b_c$, $c_c$, $d_c$, $e_c$, $f_c$, $g_c$ peut être utilisé pour un sol présentant un facteur de fermeté supérieur à une valeur seuil. La valeur seuil du facteur de fermeté peut par exemple être comprise entre 50 et 85, typiquement 80, délimitant un sol meuble et un sol ferme (voir le tableau table 3 ci-dessous).

De préférence, la relation relie la charge, un logarithme du premier paramètre KL, un logarithme du facteur de fermeté et un logarithme de la pression. Lorsque le facteur de fermeté est connu, cette relation est de préférence de la forme

$$Z = d + e \log_{10}(P) + f \log_{10}(KL) + g \log_{10}(F)$$

avec Z un facteur de charge, P la pression interne du pneumatique 1, KL le premier paramètre, F le facteur de fermeté, et d, e, f, g des coefficients réels non nuls fixes préalablement déterminés.

Lorsque le facteur de fermeté du sol n'est pas connu, la charge du pneumatique est déterminée en utilisant une relation liant la charge, un logarithme du premier paramètre KL, un logarithme du deuxième paramètre KS et un logarithme de la pression. La relation est alors de la forme :

$$Z = d + e \log_{10}(P) + f \log_{10}(KL) + g \log_{10}(f_F(KL, KS))$$

Par exemple, si la fonction $f_F$ est linéaire, on a :

$$Z = d + e \log_{10}(P) + f \log_{10}(KL) + g \log_{10}(a + b \times KL + c \times KS)$$

avec Z un facteur de charge, KL le premier paramètre, KS le deuxième paramètre, et d, e, f, g des coefficients réels non nuls fixes préalablement déterminés. Lorsque la fonction $f_F$ est bilinéaire, on peut avoir :

$$Z = d + e \log_{10}(P) + f \log_{10}(KL) + g \log_{10}(\text{a} + b \times KL + c \times KS + m \times \text{KL} \times \text{KS})$$

avec a, b, c, et m des coefficients réels non nuls fixes préalablement déterminés.

Les coefficients fixes $a_c$, $b_c$, $c_c$, $d_c$, $e_c$, $f_c$, $g_c$, d, e, f, g sont de préférence choisis afin de maximiser la discrimination de classes de charge. On peut par exemple utiliser une régression multi-linéaire sur des mesures regroupées par configurations afin de déterminer les coefficients de la relation déterminant le facteur de charge. L'approche peut typiquement être statistique sur une base de plusieurs centaines de points de mesure pour plusieurs configurations. Notamment, on peut déterminer la valeur médiane du premier paramètre KL pour chaque configuration, et faire ensuite la régression multi-linéaire.

A titre d'exemple, à partir de plus de 800 points de mesure, on peut résumer les données obtenues sous la forme d'un tableau :

[table 3]

| Sol (classe de fermeté) | P (bar) | KL (°) | F (%) | Z (daN) |
|---|---|---|---|---|
| Route (D5) | 1.2 | 38.27 | 89.6 | 2245 |
| Route (D5) | 1.2 | 46.49 | 89.6 | 3575 |
| Route (D5) | 1.6 | 35.79 | 89.6 | 2245 |
| Route (D5) | 1.6 | 42.63 | 89.6 | 3575 |
| Terre C3 (D2) | 1.2 | 42.46 | 46 | 2245 |
| Terre C3 (D2) | 1.2 | 49.67 | 46 | 3575 |
| Terre C3 (D2) | 0.8 | 47.38 | 46 | 2245 |
| Terre C3 (D2) | 0.8 | 58.84 | 46 | 3575 |
| Terre C1 (D1) | 1.2 | 45.15 | 30.1 | 2245 |
| Terre C1 (D1) | 1.2 | 53.22 | 30.1 | 3575 |

(suite)

| Sol (classe de fermeté) | P (bar) | KL (°) | F (%) | Z (daN) |
|---|---|---|---|---|
| Terre C1 (D1) | 0.8 | 49.49 | 30.1 | 2245 |
| Terre C1 (D1) | 0.8 | 60.15 | 30.1 | 3575 |

En référence à la formule générale donnée plus haut impliquant les logarithmes, on obtient par une multi-régression (avec un coefficient de régression de 0,98) :

$$Z = -28157,34 + 4916,13 \log_{10}(P) + 16352,99 \log_{10}(KL) + 2079,63 \log_{10}(F)$$

soit d=-28157,34, e=4916,13, f 16352,99, g=2079,63. Les valeurs des coefficients non nuls fixes dépendent bien évidemment du type de pneumatique, du capteur 10 utilisé, de sa disposition sur le pneumatique 1, et des configurations de sol utilisées pour recueillir les données. Ces valeurs sont données pour un pneumatique 1 arrière. Selon le même protocole, on trouve pour un pneumatique avant : d=-16135,85, e=2284,29, f=8953,35, g=1718,28. Il est à noter que dans le cas où le facteur de fermeté n'est pas fourni, les mêmes coefficients a, b, c que précédemment peuvent être appliqués.

En analysant la statistique de cette charge estimée sur les différents types de sol, toutes pressions confondues, on en déduit les seuils de classification de la charge (ici pour un pneumatique arrière). Les seuils de classification dépendent bien entendu des classes de charge que l'on cherche à identifier, lesquelles dépendent du véhicule 9, du pneumatique 1, et de l'utilisation qui veut être faite de l'information de charge.

A titre d'exemple, la Fig. 8 montre les seuils qui sont déterminés pour trois configurations de charge différentes (2245 daN, 2890 daN, et 3575 daN). Un premier diagramme en boîte 81 montre la charge déterminée en daN pour une première configuration de charge à 2245 daN, associé à une première densité de probabilité 82. Un deuxième diagramme en boîte 83 montre la charge déterminée en daN pour une deuxième configuration de charge à 2890daN, associé à une deuxième densité de probabilité 84. Un troisième diagramme en boîte 85 montre la charge déterminée en daN pour une troisième configuration de charge à 3575 daN, associé à une troisième densité de probabilité 86.

Les médianes des charges déterminées pour chacune des configurations sont très proches des charges respectives de chaque configuration. La charge médiane déterminée pour la première configuration de charge à 2245 daN est ainsi de 2257 daN, la charge médiane déterminée pour la deuxième configuration de charge à 2890 daN est ainsi de 2949 daN, et la charge médiane déterminée pour la troisième configuration de charge à 3575 daN est ainsi de 3549 daN.

Les seuils de classification peuvent alors correspondre au croisement des densité de probabilités 82, 84, 86. Les lignes en pointillés 87, 88, 89, et 90 illustrent les seuils de classification, qui sont alors approximativement de 1837, 2590, 3252, et 4004. On peut alors distinguer les classes suivantes :

[table 4]

| Classe de charge | Limite basse (daN) | Limite haute (daN) |
|---|---|---|
| Charge très faible | - | 1837 |
| Charge faible | 1837 | 2590 |
| Charge moyenne | 2590 | 3252 |
| Charge élevée | 3252 | 4004 |
| Charge très élevée | 4004 | - |

Ces classes sont préalablement déterminées, et stockées dans la mémoire de l'unité de traitement 15, qui stocke également la relation liant la charge, un logarithme de la pression, un logarithme du premier paramètre KL et le facteur de fermeté ou un logarithme du deuxième paramètre KS. Les classes peuvent être utilisées par l'unité de traitement 15 pour traiter les données de mesure pour le pneumatique 1 et le capteur 10 correspondant, afin de déterminer la classe de charge du pneumatique 1 lorsqu'il roule.

La connaissance de la charge présente de nombreux avantages. Il est ainsi possible de surveiller les niveaux de charge d'un pneumatique afin de s'assurer que le pneumatique est utilisé dans des conditions de sécurité satisfaisante, notamment aux regards d'autres facteurs tels que la vitesse du véhicule ou la capacité de charge du pneumatique. De plus, la charge du pneumatique peut être surveillée pour déterminer d'autres caractéristiques relatives à l'usure du pneumatique, par exemple en utilisant un historique des charges pour mieux estimer une usure du pneumatique et décider de son remplacement au moment le plus opportun. De plus, des actions peuvent être entreprises pour adapter les conditions de roulage à la charge. Par exemple, la pression d'un pneumatique peut être modifiée pour être adaptée à la charge s'appliquant sur le pneumatique.

En couplant des états de charge avec des données géolocalisations synchrones, il est possible d'établir une cartographie de la charge d'une parcelle, éventuellement couplée avec d'autres caractéristiques du sol. Ainsi, dans le cas où le véhicule 9 est un tracteur attelé à un engin de travail du sol, la charge s'exerçant sur le pneumatique 1 varie en fonction de la nature du sol travaillé. Une telle cartographie peut s'avérer utilise pour déterminer un aménagement du sol de la parcelle, comme par exemple la mise en place d'un drainage du sol ou un amendement de celui-ci.

**Revendications**

1. Procédé de détermination de la charge d'un pneumatique (1) monté sur un véhicule (9) et roulant sur le sol, ledit pneumatique (1) étant muni d'un capteur (10) configuré pour acquérir un signal de mesure représentatif de l'évolution de la courbure du pneumatique lors du roulement sur un sol (7), le procédé comprenant les étapes suivantes :

   - acquisition (S1) par le capteur (10) d'un signal de mesure représentatif de l'évolution de la courbure du pneumatique (1) au cours du roulement,
   - obtention d'une mesure de pression interne du pneumatique,
   - détermination (S2) à partir du signal de mesure de données de mesure comprenant un premier paramètre (KL) représentatif d'une longueur d'une surface de contact (6) avec le sol (7) lors d'un tour de roue du pneumatique,

   **caractérisé en ce que** le procédé comprend les étapes suivantes :

   - obtention d'un facteur de fermeté représentatif d'un état de fermeté du sol, tel que meuble ou dur, dérivé de mesures effectuées pendant que le pneumatique roule sur ledit sol,
   - détermination (S4) de la charge du pneumatique en fonction du premier paramètre (KL), du facteur de fermeté et de la pression interne du pneumatique.

2. Procédé selon la revendication 1, dans lequel la charge du pneumatique est déterminée en utilisant une relation liant ladite charge, la pression, le facteur de fermeté, et le premier paramètre (KL).

3. Procédé selon l'une des revendications précédentes, dans lequel la relation lie ladite charge, un logarithme du premier paramètre (KL), un logarithme du facteur de fermeté et un logarithme de la pression, et est de la forme

$$Z = d + e \log_{10}(P) + f \log_{10}(KL) + g \log_{10}(F)$$

avec Z un facteur de charge, P la pression interne du pneumatique, KL le premier paramètre, F le facteur de fermeté, et d, e, f, g des coefficients réels non nuls fixes préalablement déterminés.

4. Procédé selon l'une des revendications précédentes, dans lequel lors du roulement, au cours d'un tour de roue, la courbure du pneumatique (1) évolue selon un cycle présentant :

   - une partie hors contact avec le sol se caractérisant sur le signal de mesure par une courbure stable,
   - une partie en contact avec le sol se caractérisant sur le signal de mesure par un pic de variation de courbure de contact (20, 30),
   - une transition dite transition d'entrée entre la partie hors contact avec le sol et la partie en contact avec le sol, se caractérisant sur le signal de mesure par un pic de variation de courbure d'entrée (21, 22) opposé au pic de variation de courbure de contact (20, 30),
   - une transition dite de sortie entre la partie en contact avec le sol et la partie hors contact avec le sol, se caractérisant sur le signal de mesure par un pic de variation de courbure de sortie (22, 32) opposé au pic de variation de courbure de contact (20, 30),

   le premier paramètre (KL) étant déterminé à partir d'une distance entre le pic de variation de courbure d'entrée (31)

et le pic de variation de courbure de sortie (32).

5. Procédé selon l'une des revendications précédentes, dans lequel les données de mesure comprennent un deuxième paramètre (KS) déterminé à partir du signal de mesure, représentatif d'une vitesse de mise à plat du pneumatique (1) lors du contact avec le sol (7) lors d'un tour de roue du pneumatique, et dans lequel le facteur de fermeté est déterminé à partir du premier paramètre (KL) et du deuxième paramètre (KS).

6. Procédé selon la revendication 5, dans lequel, lors du roulement, au cours d'un tour de roue, la courbure du pneumatique (1) évolue selon un cycle présentant :

   - une partie hors contact avec le sol,
   - une partie en contact avec le sol,

   dans lequel le premier paramètre (KL) est déterminé à partir d'une partie du signal de mesure correspondant à la partie en contact avec le sol, et le deuxième paramètre est déterminé à partir d'une partie du signal de mesure correspondant à une transition de la courbure du pneumatique (1) entre la partie hors contact avec le sol et la partie en contact avec le sol.

7. Procédé selon la revendication 5 ou 6, dans lequel, lors du roulement, au cours d'un tour de roue, la courbure du pneumatique (1) évolue selon un cycle présentant :

   - une partie hors contact avec le sol se caractérisant sur le signal de mesure par une courbure stable,
   - une partie en contact avec le sol se caractérisant sur le signal de mesure par un pic de variation de courbure de contact (20, 30),
   - une transition dite transition d'entrée entre la partie hors contact avec le sol et la partie en contact avec le sol, se caractérisant sur le signal de mesure par un pic de variation de courbure d'entrée (21, 22) opposé au pic de variation de courbure de contact (20, 30),
   - une transition dite de sortie entre la partie en contact avec le sol et la partie hors contact avec le sol, se caractérisant sur le signal de mesure par un pic de variation de courbure de sortie (22, 32) opposé au pic de variation de courbure de contact (20, 30),
   le premier paramètre (KL) étant déterminé à partir d'une distance entre le pic de variation de courbure d'entrée (31) et le pic de variation de courbure de sortie (32),
   le deuxième paramètre (KS) étant déterminé par une pente entre le pic de variation de courbure d'entrée (31) et le pic de variation de courbure de contact (30).

8. Procédé selon l'une des revendications 5 à 7, dans lequel le facteur de fermeté du sol (7) est déterminé en utilisant une relation liant le facteur de fermeté du sol, le premier paramètre (KL) et le deuxième paramètre (KS).

9. Procédé selon la revendication précédente, dans lequel la relation liant le facteur de fermeté du sol, le premier paramètre (KL) et le deuxième paramètre (KS) est une relation linéaire de la forme :

$$F = a + b \times KL + c \times KS$$

avec F le facteur de fermeté, KL le premier paramètre, KS le deuxième paramètre, et a, b, c des coefficients fixes préalablement déterminés.

10. Procédé selon l'une des revendications 5 à 9, dans lequel la charge du pneumatique est déterminée en utilisant une relation liant ladite charge, un logarithme du premier paramètre (KL), un logarithme du deuxième paramètre (KS) et un logarithme de la pression.

11. Procédé selon la revendication précédente, dans lequel la relation est de la forme

$$Z = d + e \log_{10}(P) + f \log_{10}(KL) + g \log_{10}(a + b \times KL + c \times KS)$$

avec Z un facteur de charge, KL le premier paramètre, KS le deuxième paramètre, et d, e, f, g des coefficients réels non nuls fixes préalablement déterminés.

**12.** Procédé selon l'une des revendications 5 à 11, dans lequel la charge est déterminée en calculant un facteur de charge (Z) à partir du premier paramètre (KL), du deuxième paramètre (KS), et de la pression, et en comparant ledit facteur de charge à des seuils délimitant des classes de charge.

**13.** Pneumatique (1) comprenant un capteur de pression interne au pneumatique et un capteur (10) sensible à l'évolution de la courbure du pneumatique, configuré pour générer un signal de mesure représentatif de l'évolution de la courbure du pneumatique lors du roulement sur un sol, comprenant une partie active (11) et une carte électronique (12), la partie active (11) étant configurée pour générer le signal de mesure, le capteur (10) étant configuré pour transmettre les données de mesure à l'extérieur du pneumatique (1), la carte électronique (12) étant configurée pour déterminer des données de mesure comprenant :

a) un premier paramètre (KL) représentatif d'une longueur d'une surface de contact (6) avec le sol (7) lors d'un tour de roue du pneumatique, et **caractérisé en ce que** :
b) un deuxième paramètre (KS) représentatif d'une vitesse de mise à plat du pneumatique (1) lors du contact avec le sol (7) lors d'un tour de roue du pneumatique,

**14.** Unité de traitement de données (15) configurée pour recevoir une mesure de pression et des données de mesure dérivées d'un signal de mesure représentatif de l'évolution de la courbure du pneumatique lors du roulement sur un sol, lesdites données de mesure comprenant :

a) un premier paramètre (KL) représentatif d'une longueur d'une surface de contact (6) avec le sol (7) lors d'un tour de roue du pneumatique, et **caractérisé en ce que** :
b) un deuxième paramètre (KS) représentatif d'une vitesse de mise à plat du pneumatique (1) lors du contact avec le sol (7) lors d'un tour de roue du pneumatique,

l'unité de traitement de données (15) étant configurée pour déterminer la charge du pneumatique en fonction du premier paramètre (KL), du deuxième paramètre (KS), et de la pression.

**15.** Véhicule (9) comprenant :

- au moins un pneumatique (1),
- au moins capteur (10) sensible à l'évolution de la courbure du pneumatique, configuré pour générer un signal de mesure représentatif de l'évolution de la courbure du pneumatique lors du roulement sur un sol,
- au moins une sonde de pression (13) adaptée pour fournir une mesure de pression interne du pneumatique,
- une unité de traitement de données (15) configurée pour recevoir la mesure de pression interne du pneumatique et des données de mesure dérivées du signal de mesure représentatif de l'évolution de la courbure du pneumatique lors du roulement sur un sol et pour déterminer l'état de fermeté du sol, tel que meuble ou dur, en fonction des données de mesure, les données de mesure comprenant :

a) un premier paramètre (KL) représentatif d'une longueur d'une surface de contact (6) avec le sol (7) lors d'un tour de roue du pneumatique, et
b) un deuxième paramètre (KS) représentatif d'une vitesse de mise à plat du pneumatique (1) lors du contact avec le sol (7) lors d'un tour de roue du pneumatique,

le véhicule étant configuré pour mettre en oeuvre le procédé selon l'une quelconque des revendications 1 à 12.

**Patentansprüche**

**1.** Verfahren zur Bestimmung der Last eines Reifens (1), der an einem Fahrzeug (9) angebracht ist und auf dem Boden rollt, wobei der Reifen (1) mit einem Sensor (10) ausgestattet ist, der dafür ausgelegt ist, ein Messsignal zu erfassen, das für die Änderung der Krümmung des Reifens beim Rollen auf einem Boden (7) repräsentativ ist, wobei das Verfahren die folgenden Schritte umfasst:

- Erfassung (S1), durch den Sensor (10), eines Messsignals, das für die Änderung der Krümmung des Reifens (1) während des Rollens repräsentativ ist,
- Gewinnung eines Messwertes des Innendrucks des Reifens,
- Bestimmung (S2), aus dem Messsignal, von Messdaten, die einen ersten Parameter (KL) umfassen, der für eine Länge einer Kontaktfläche (6) mit dem Boden (7) bei einer Radumdrehung des Reifens repräsentativ ist, **dadurch gekennzeichnet, dass** das Verfahren die folgenden Schritte umfasst:

- Gewinnung eines Festigkeitsfaktors, der für einen Festigkeitszustand des Bodens, wie etwa weich oder hart, repräsentativ ist und aus Messungen abgeleitet wird, die durchgeführt werden, während der Reifen auf dem Boden rollt,
- Bestimmung (S4) der Last des Reifens in Abhängigkeit von dem ersten Parameter (KL), dem Festigkeitsfaktor und dem Innendruck des Reifens.

2. Verfahren nach Anspruch 1, wobei die Last des Reifens unter Verwendung einer Beziehung bestimmt wird, welche diese Last, den Druck, den Festigkeitsfaktor und den ersten Parameter (KL) miteinander verknüpft.

3. Verfahren nach einem der vorhergehenden Ansprüche, wobei die Beziehung die Last, einen Logarithmus des ersten Parameters (KL), einen Logarithmus des Festigkeitsfaktors und einen Logarithmus des Drucks miteinander verknüpft und die Form

$$Z = d + e \log_{10}(P) + f \log_{10}(KL) + g \log_{10}(F)$$

hat, wobei Z ein Lastfaktor ist, P der Innendruck des Reifens ist, KL der erste Parameter ist, F der Festigkeitsfaktor ist und d, e, f, g vorab bestimmte feste, von null verschiedene reelle Koeffizienten sind.

4. Verfahren nach einem der vorhergehenden Ansprüche, wobei beim Fahren während einer Radumdrehung die Krümmung des Reifens (1) sich gemäß einem Zyklus ändert, welcher aufweist:

- einen Teil ohne Kontakt mit dem Boden, der am Messsignal durch eine stabile Krümmung gekennzeichnet ist,
- einen in Kontakt mit dem Boden befindlichen Teil, der am Messsignal durch einen Kontakt-Peak der Krümmungsänderung (20, 30) gekennzeichnet ist,
- einen Übergang, Eingangsübergang genannt, zwischen dem Teil ohne Kontakt mit dem Boden und dem in Kontakt mit dem Boden befindlichen Teil, der am Messsignal durch einen Eingangs-Peak der Krümmungsänderung (21, 22) gekennzeichnet ist, der zum Kontakt-Peak der Krümmungsänderung (20, 30) entgegengesetzt ist,
- einen Übergang, Ausgangsübergang genannt, zwischen dem in Kontakt mit dem Boden befindlichen Teil und dem Teil ohne Kontakt mit dem Boden, der am Messsignal durch einen Ausgangs-Peak der Krümmungsänderung (22, 32) gekennzeichnet ist, der zum Kontakt-Peak der Krümmungsänderung (20, 30) entgegengesetzt ist,

wobei der erste Parameter (KL) aus einem Abstand zwischen dem Eingangs-Peak der Krümmungsänderung (31) und dem Ausgangs-Peak der Krümmungsänderung (32) bestimmt wird.

5. Verfahren nach einem der vorhergehenden Ansprüche, wobei die Messdaten einen aus dem Messsignal bestimmten zweiten Parameter (KS) umfassen, der für eine Geschwindigkeit des Flachdrückens des Reifens (1) beim Kontakt mit dem Boden (7) bei einer Radumdrehung des Reifens repräsentativ ist, und wobei der Festigkeitsfaktor aus dem ersten Parameter (KL) und dem zweiten Parameter (KS) bestimmt wird.

6. Verfahren nach Anspruch 5, wobei beim Fahren während einer Radumdrehung die Krümmung des Reifens (1) sich gemäß einem Zyklus ändert, welcher aufweist:

- einen Teil ohne Kontakt mit dem Boden,
- einen in Kontakt mit dem Boden befindlichen Teil, wobei der erste Parameter (KL) aus einem Teil des Messsignals bestimmt wird, der dem in Kontakt mit dem Boden befindlichen Teil entspricht, und der zweite Parameter aus einem Teil des Messsignals bestimmt wird, der einem Übergang der Krümmung des Reifens (1) zwischen dem Teil ohne Kontakt mit dem Boden und dem in Kontakt mit dem Boden befindlichen Teil entspricht.

7. Verfahren nach Anspruch 5 oder 6, wobei beim Fahren während einer Radumdrehung die Krümmung des Reifens (1) sich gemäß einem Zyklus ändert, welcher aufweist:

- einen Teil ohne Kontakt mit dem Boden, der am Messsignal durch eine stabile Krümmung gekennzeichnet ist,
- einen in Kontakt mit dem Boden befindlichen Teil, der am Messsignal durch einen Kontakt-Peak der Krümmungsänderung (20, 30) gekennzeichnet ist,

- einen Übergang, Eingangsübergang genannt, zwischen dem Teil ohne Kontakt mit dem Boden und dem in Kontakt mit dem Boden befindlichen Teil, der am Messsignal durch einen Eingangs-Peak der Krümmungsänderung (21, 22) gekennzeichnet ist, der zum Kontakt-Peak der Krümmungsänderung (20, 30) entgegengesetzt ist,

- einen Übergang, Ausgangsübergang genannt, zwischen dem in Kontakt mit dem Boden befindlichen Teil und dem Teil ohne Kontakt mit dem Boden, der am Messsignal durch einen Ausgangs-Peak der Krümmungsänderung (22, 32) gekennzeichnet ist, der zum Kontakt-Peak der Krümmungsänderung (20, 30) entgegengesetzt ist,

wobei der erste Parameter (KL) aus einem Abstand zwischen dem Eingangs-Peak der Krümmungsänderung (31) und dem Ausgangs-Peak der Krümmungsänderung (32) bestimmt wird, wobei der zweite Parameter (KS) durch eine Neigung zwischen dem Eingangs-Peak der Krümmungsänderung (31) und dem Kontakt-Peak der Krümmungsänderung (30) bestimmt wird.

8. Verfahren nach einem der Ansprüche 5 bis 7, wobei der Festigkeitsfaktor des Bodens (7) unter Verwendung einer Beziehung bestimmt wird, welche den Festigkeitsfaktor des Bodens, den ersten Parameter (KL) und den zweiten Parameter (KS) miteinander verknüpft.

9. Verfahren nach dem vorhergehenden Anspruch, wobei die Beziehung, welche den Festigkeitsfaktor des Bodens, den ersten Parameter (KL) und den zweiten Parameter (KS) miteinander verknüpft, eine lineare Beziehung der Form

$$F = a + b \times KL + c \times KS$$

ist, wobei F der Festigkeitsfaktor ist, KL der erste Parameter ist, KS der zweite Parameter ist und a, b, c vorab bestimmte feste Koeffizienten sind.

10. Verfahren nach einem der Ansprüche 5 bis 9, wobei die Last des Reifens unter Verwendung einer Beziehung bestimmt wird, welche diese Last, einen Logarithmus des ersten Parameters (KL), einen Logarithmus des zweiten Parameters (KS) und einen Logarithmus des Drucks miteinander verknüpft.

11. Verfahren nach dem vorhergehenden Anspruch, wobei die Beziehung die Form

$$Z = d + e \log_{10}(P) + f \log_{10}(KL) + g \log_{10}(a + b \times KL + c \times KS)$$

hat, wobei Z ein Lastfaktor ist, KL der erste Parameter ist, KS der zweite Parameter ist und d, e, f, g vorab bestimmte feste, von null verschiedene reelle Koeffizienten sind.

12. Verfahren nach einem der Ansprüche 5 bis 11, wobei die Last bestimmt wird, indem ein Lastfaktor (Z) aus dem ersten Parameter (KL), dem zweiten Parameter (KS) und dem Druck bestimmt wird und indem dieser Lastfaktor mit Schwellenwerten verglichen wird, die Lastklassen begrenzen.

13. Reifen (1), welcher einen Sensor für den Innendruck des Reifens umfasst, sowie einen für die Änderung der Krümmung des Reifens empfindlichen Sensor (10), der dafür ausgelegt ist, ein Messsignal zu erzeugen, das für die Änderung der Krümmung des Reifens beim Rollen auf einem Boden repräsentativ ist, und einen aktiven Teil (11) und eine Leiterplatte (12) umfasst, wobei der Aktive Teil (11) dafür ausgelegt ist, das Messsignal zu erzeugen, wobei der Sensor (10) dafür ausgelegt ist, die Messdaten zur Außenseite des Reifens (1) zu übertragen, wobei die Leiterplatte (12) dafür ausgelegt ist, Messdaten zu bestimmen, welche umfassen:

a) einen ersten Parameter (KL), der für eine Länge einer Kontaktfläche (6) mit dem Boden (7) bei einer Radumdrehung des Reifens repräsentativ ist,

und **gekennzeichnet durch**:
b) einen zweiten Parameter (KS), der für eine Geschwindigkeit des Flachdrückens des Reifens (1) beim Kontakt mit dem Boden (7) bei einer Radumdrehung des Reifens repräsentativ ist.

14. Datenverarbeitungseinheit (15), welche dafür ausgelegt ist, einen Druckmesswert und Messdaten, die von einem Messsignal abgeleitet sind, das für die Änderung der Krümmung des Reifens beim Rollen auf einem Boden repräsentativ ist, zu empfangen, wobei die Messdaten umfassen:

a) einen ersten Parameter (KL), der für eine Länge einer Kontaktfläche (6) mit dem Boden (7) bei einer Radumdrehung des Reifens repräsentativ ist, und **gekennzeichnet durch**:
b) einen zweiten Parameter (KS), der für eine Geschwindigkeit des Flachdrückens des Reifens (1) beim Kontakt mit dem Boden (7) bei einer Radumdrehung des Reifens repräsentativ ist, wobei die Datenverarbeitungseinheit (15) dafür ausgelegt ist, die Last des Reifens in Abhängigkeit von dem ersten Parameter (KL), dem zweiten Parameter (KS) und dem Druck zu bestimmen.

**15.** Fahrzeug (9), welches umfasst:

- mindestens einen Reifen (1),
- mindestens einen für die Änderung der Krümmung des Reifens empfindlichen Sensor (10), der dafür ausgelegt ist, ein Messsignal zu erzeugen, das für die Änderung der Krümmung des Reifens beim Rollen auf einem Boden repräsentativ ist,
- mindestens eine Druckmesssonde (13), die dazu eingerichtet ist, einen Messwert des Innendrucks des Reifens zu liefern,
- eine Datenverarbeitungseinheit (15), die dafür ausgelegt ist, den Messwert des Innendrucks des Reifens und Messdaten, die von dem Messsignal abgeleitet sind, das für die Änderung der Krümmung des Reifens beim Rollen auf einem Boden repräsentativ ist, zu empfangen und den Festigkeitszustand des Bodens, wie etwa weich oder hart, in Abhängigkeit von den Messdaten zu bestimmen, wobei die Messdaten umfassen:

a) einen ersten Parameter (KL), der für eine Länge einer Kontaktfläche (6) mit dem Boden (7) bei einer Radumdrehung des Reifens repräsentativ ist, und
b) einen zweiten Parameter (KS), der für eine Geschwindigkeit des Flachdrückens des Reifens (1) beim Kontakt mit dem Boden (7) bei einer Radumdrehung des Reifens repräsentativ ist,

wobei das Fahrzeug dafür ausgelegt ist, das Verfahren nach einem der Ansprüche 1 bis 12 durchzuführen.

## Claims

1.  Method for determining the loading of a tyre (1) mounted on a vehicle (9) and running along the ground, said tyre (1) being equipped with a sensor (10) configured to acquire a measurement signal representative of the change in curvature of the tyre as it runs along the ground (7), the method comprising the following steps:

- the acquisition (S1), by the sensor (10) of a measurement signal representative of the change in curvature of the tyre (1) during running,
- the obtaining of a measurement of the internal pressure of the tyre,
- the determination (S2), from the measurement signal, of measurement data comprising a first parameter (KL) representative of a length of a contact patch (6) in contact with the ground (7) during a revolution of the wheel bearing the tyre,

**Characterized in that** the method comprises the following steps:

- the obtaining of a firmness factor representative of a condition of firmness of the ground such as loose or hard, which is derived from measurements taken while the tyre is rolling over said ground,
- the determination (S4) of the loading of the tyre as a function of the first parameter (KL), of the firmness factor and of the internal pressure of the tyre.

2.  Method according to Claim 1, wherein the loading of the tyre is determined by using a relationship connecting said load, the pressure, the firmness factor and the first parameter (KL).

3.  Method according to one of the preceding claims, wherein the relationship connects said load, a logarithm of the first parameter (KL), a logarithm of the firmness factor and a logarithm of the pressure, and is of the form:

$$Z = d + e \log_{10}(P) + f \log_{10}(KL) + g \log_{10}(F)$$

where Z is a loading factor, P is the internal pressure of the tyre, KL is the first parameter, F is the firmness factor and d, e, f and g are predetermined non-zero fixed real coefficients.

4. Method according to one of the preceding claims, wherein, during running, over the course of one revolution of the wheel, the curvature of the tyre (1) changes according to a cycle exhibiting:

- a part not in contact with the ground, **characterized in** the measurement signal by a stable curvature,
- a part in contact with the ground, **characterized in** the measurement signal by a spike in the variation of contact curvature (20, 30),
- a transition referred to as the coming-into-contact transition between the part not in contact with the ground and the part in contact with the ground, **characterized in** the measurement signal by a coming-into-contact curvature variation spike (21, 22) that is the opposite of the spike in the variation of contact curvature (20, 30),
- a transition referred to as the coming-out-of-contact transition between the part in contact with the ground and the part not in contact with the ground, **characterized in** the measurement signal by a coming-out-of-contact curvature variation spike (22, 32) that is the opposite of the spike in the variation of contact curvature (20, 30),

the first parameter (KL) being determined from a distance between the coming-into-contact curvature variation spike (31) and the coming-out-of-contact curvature variation spike (32).

5. Method according to one of the preceding claims, wherein the measurement data comprise a second parameter (KS) determined from the measurement signal, representative of a rate of flattening of the tyre (1) upon contact with the ground (7) during a revolution of the wheel bearing the tyre, and wherein the firmness factor is determined from the first parameter (KL) and from the second parameter (KS).

6. Method according to Claim 5, wherein, during running, over the course of one revolution of the wheel, the curvature of the tyre (1) changes according to a cycle exhibiting:

- a part not in contact with the ground,
- a part in contact with the ground,

wherein the first parameter (KL) is determined from part of the measurement signal corresponding to the part in contact with the ground, and the second parameter is determined from part of the measurement signal corresponding to a transition in the curvature of the tyre (1) between the part not in contact with the ground and the part in contact with the ground.

7. Method according to Claim 5 or 6, wherein, during running, over the course of one revolution of the wheel, the curvature of the tyre (1) changes according to a cycle exhibiting:

- a part not in contact with the ground, **characterized in** the measurement signal by a stable curvature,
- a part in contact with the ground, **characterized in** the measurement signal by a spike in the variation of contact curvature (20, 30),
- a transition referred to as the coming-into-contact transition between the part not in contact with the ground and the part in contact with the ground, **characterized in** the measurement signal by a coming-into-contact curvature variation spike (21, 22) that is the opposite of the spike in the variation of contact curvature (20, 30),
- a transition referred to as the coming-out-of-contact transition between the part in contact with the ground and the part not in contact with the ground, **characterized in** the measurement signal by a coming-out-of-contact curvature variation spike (22, 32) that is the opposite of the spike in the variation of contact curvature (20, 30),
the first parameter (KL) being determined from a distance between the coming-into-contact curvature variation spike (31) and the coming-out-of-contact curvature variation spike (32),
the second parameter (KS) being determined from a gradient between the coming-into-contact curvature variation spike (31) and the spike in the variation of contact curvature (30).

8. Method according to one of Claims 5 to 7, wherein the firmness factor indicating the firmness of the ground (7) is determined using a relationship connecting the firmness factor indicating the firmness of the ground, the first parameter (KL) and the second parameter (KS).

9. Method according to the preceding claim, wherein the relationship connecting the firmness factor indicating the firmness of the ground, the first parameter (KL) and the second parameter (KS) is a linear relationship of the form:

$$F = a + b \times KL + c \times KS$$

where F is the firmness factor, KL is the first parameter, KS is the second parameter, and a, b and c are predetermined fixed coefficients.

10. Method according to one of Claims 5 to 9, wherein the loading of the tyre is determined using a relationship connecting said load, a logarithm of the first parameter (KL), a logarithm of the second parameter (KS) and a logarithm of the pressure.

11. Method according to the preceding claim, wherein the relationship is of the form:

$$Z = d + e \log_{10}(P) + f \log_{10}(KL) + g \log_{10}(a + b \times KL + c \times KS)$$

where Z is a loading factor, KL is the first parameter, KS is the second parameter, and d, e, f and g are predetermined non-zero fixed real coefficients.

12. Method according to one of Claims 5 to 11, wherein the load is determined by calculating a loading factor (Z) from the first parameter (KL), from the second parameter (KS) and from the pressure, and by comparing said loading factor against thresholds delimiting loading categories.

13. Tyre (1) comprising a pressure sensor for the internal pressure inside the tyre, and a sensor (10) sensitive to the change in curvature of the tyre and configured to generate a measurement signal representative of the change in curvature of the tyre as it runs over the ground, comprising an active part (11) and an electronic board (12), the active part (11) being configured to generate the measurement signal, the sensor (10) being configured to transmit the measurement data to outside the tyre (1), the electronic board (12) being configured to determine measurement data comprising:

   a) a first parameter (KL) representative of a length of a contact patch (6) in contact with the ground (7) during a revolution of the wheel bearing the tyre, **characterized in that**:
   b) a second parameter (KS) representative of a rate of flattening of the tyre (1) upon contact with the ground (7) during a revolution of the wheel bearing the tyre.

14. Data processing unit (15) configured to receive a pressure measurement and measurement data derived from a measurement signal representative of the change in curvature of the tyre as it runs over the ground, said measurement data comprising:

   a) a first parameter (KL) representative of a length of a contact patch (6) in contact with the ground (7) during a revolution of the wheel bearing the tyre, **characterized in that**:
   b) a second parameter (KS) representative of a rate of flattening of the tyre (1) upon contact with the ground (7) during a revolution of the wheel bearing the tyre, and

the data processing unit (15) being configured to determine the loading of the tyre as a function of the first parameter (KL), of the second parameter (KS) and of the pressure.

15. Vehicle (9) comprising:

   - at least one tyre (1),
   - at least one sensor (10) sensitive to the change in curvature of the tyre and configured to generate a measurement signal representative of the change in curvature of the tyre as it runs over the ground,
   - at least one pressure probe (13) designed to provide a measurement of the internal pressure of the tyre,
   - a data processing unit (15) configured to receive the measurement of the internal pressure of the tyre and measurement data derived from the measurement signal representative of the change in curvature of the tyre as it runs over the ground, and to determine the state of firmness of the ground, such as loose or hard, as a function of the measurement data, the measurement data comprising:

   a) a first parameter (KL) representative of a length of a contact patch (6) in contact with the ground (7) during a revolution of the wheel bearing the tyre, and

b) a second parameter (KS) representative of a rate of flattening of the tyre (1) upon contact with the ground (7) during a revolution of the wheel bearing the tyre,

the vehicle being configured to implement the method according to any one of Claims 1 to 12.

# FIG 1

# FIG 2

**FIG 3**

Acquisition par le capteur
d'un signal de mesure — S1

↓

Détermination des
données de mesure — S2

S21

Obtention d'une
mesure de pression

Détermination d'un
facteur de charge — S3

Obtention de la
fermeté

S22

↓

Détermination d'une
classe de charge — S4

## FIG 4

## FIG 5

Échantillons

## FIG 6

## FIG 7

# FIG 8

Configuration de charge          Densité de probabilités

# FIG 9

Fermeté (%)

## RÉFÉRENCES CITÉES DANS LA DESCRIPTION

**Documents brevets cités dans la description**

- WO 2012091719 A1
- EP 2937232 A
- WO 2018003942 A